# EUROPEAN PATENT APPLICATION

(11) **EP 4 510 548 A1**
(43) Date of publication of application: **19.02.2025**
(21) Application number: 23812025.7
(22) Date of filing: 02.05.2023
(51) Int. Cl.: H04M 1/03, H04R 1/08, H05K 5/06

(54) **ELECTRONIC DEVICE COMPRISING ACOUSTIC MODULE**

(30) Priority: 27.05.2022 KR 20220065431; 07.09.2022 KR 20220113632
(71) Applicant: Samsung Electronics Co., Ltd., Suwon-si, Gyeonggi-do 16677 (KR)
(72) Inventor: KIM, Changmin, Suwon-si Gyeonggi-do 16677 (KR); KIM, Jonghwan, Suwon-si Gyeonggi-do 16677 (KR); KIM, Kihyeun, Suwon-si Gyeonggi-do 16677 (KR); KIM, Sohae, Suwon-si Gyeonggi-do 16677 (KR); KIM, Jinyong, Suwon-si Gyeonggi-do 16677 (KR); SONG, Jihoon, Suwon-si Gyeonggi-do 16677 (KR); SONG, Hakhoon, Suwon-si Gyeonggi-do 16677 (KR)
(74) Representative: Nederlandsch Octrooibureau
(86) International application number: PCT/KR2023/005950
(87) International publication number: WO 2023/229249

(57) **Abstract**

An electronic device according to an embodiment of the disclosure includes a housing including a front plate, a back plate that faces away from the front plate, and a side member that surrounds a space between the front plate and the back plate, at least one microphone hole that penetrates the side member in a first direction from an outer surface of the side member toward an inner surface of the side member, a microphone module that receives an acoustic signal through the microphone hole, a support member that is disposed between the microphone module and the front plate in the housing and that includes a plurality of inner surfaces, an acoustic passage that is surrounded by the plurality of inner surfaces of the support member and that faces toward the microphone module from the microphone hole, and a branch passage that is formed in the support member and that diverges from the acoustic passage. The acoustic passage includes a first section that extends from the microphone hole in the first direction and a second section fluidically connected with the first section and bent in a second direction toward the microphone module to face the microphone module. The branch passage is formed in a direction different from the second direction from at least one of the plurality of inner surfaces of the support member. Besides, it may be permissible to prepare various other embodiments speculated through the specification.

## Description

### [Technical Field]

Embodiments of the disclosure described herein relate to an electronic device including an acoustic module and a method of forming the same.

### [Background Art]

Recently, electronic devices such as smartphones, tablet PCs, desktop PCs, portable multimedia players (PMPs), MP3 players, or wearable devices have been widely used, and users are able to access various contents through the electronic devices.

As the contents provided by the electronic devices are diversified, the electronic devices are implemented in the form of a multimedia device having complex functions.

### [Disclosure]

### [Technical Problem]

As the multimedia functions of the electronic devices are diversified, various electronic components may be accommodated in the electronic devices. For example, a microphone module may be accommodated in the electronic devices. When strong air pressure is applied to a vibration plate included in the microphone module from the outside, stress may be applied to the vibration plate due to the external air pressure. Due to this, the vibration plate and a component in the microphone module that is adjacent to the vibration plate may be damaged.

Embodiments of the disclosure provide an electronic device for minimizing damage to a vibration plate.

### [Technical Solution]

An electronic device according to an embodiment of the disclosure includes a housing including a front plate, a back plate that faces away from the front plate, and a side member that surrounds a space between the front plate and the back plate, at least one microphone hole that penetrates the side member in a first direction from an outer surface of the side member toward an inner surface of the side member, a microphone module that receives an acoustic signal through the microphone hole, a support member that is disposed between the microphone module and the front plate in the housing and that includes a plurality of inner surfaces, an acoustic passage that is surrounded by the plurality of inner surfaces of the support member and that faces toward the microphone module from the microphone hole, and a branch passage that is formed in the support member and that diverges from the acoustic passage. The acoustic passage includes a first section that extends from the microphone hole in the first direction and a second section fluidically connected with the first section and bent in a second direction toward the microphone module to face the microphone module. The branch passage is formed in a direction different from the second direction from at least one of the plurality of inner surfaces of the support member.

### [Advantageous Effects]

The electronic device according to the embodiment of the disclosure may include at least one branch passage diverging from the acoustic passage and thus may distribute the pressure of a sound received from the outside.

The electronic device according to the embodiment of the disclosure may minimize stress applied to the vibration plate of the microphone module, thereby minimizing a defect due to damage to the vibration plate.

In addition, the disclosure may provide various effects that are directly or indirectly recognized.

### [Description of Drawings]

FIG. 1 is a perspective view illustrating a front side of an electronic device according to an embodiment.
FIG. 2 is a perspective view illustrating a rear side of the electronic device according to an embodiment.
FIG. 3 is an exploded perspective view illustrating the electronic device according to an embodiment.
FIG. 4 is a sectional view of a portion of an electronic device according to an embodiment.
FIG. 5 is a schematic view illustrating an acoustic passage and a branch passage of an electronic device according to an embodiment.
FIGS. 6A to 6C are views illustrating various embodiments of a branch passage of an electronic device according to an embodiment.
FIGS. 7A to 7F are views illustrating various embodiments of a branch passage of an electronic device according to an embodiment.
FIG. 8 is a sectional view of a portion of an electronic device according to an embodiment.
FIG. 9 is a schematic view illustrating an acoustic passage and a branch passage of an electronic device according to an embodiment.
FIGS. 10A to 10C are views illustrating various embodiments of a branch passage of an electronic device according to an embodiment.
FIG. 11 is a sectional view of a portion of an electronic device according to an embodiment.
FIG. 12 is a schematic view illustrating an acoustic passage and a branch passage of an electronic device according to an embodiment.
FIG. 13 is a sectional view of a portion of an electronic device according to an embodiment.
FIG. 14 is a schematic view illustrating an acoustic passage and a branch passage of an electronic device according to an embodiment.
FIG. 15A is a perspective view illustrating a support member of an electronic device according to an embodiment, and FIG. 15B is a top view illustrating the support member having a microphone module disposed thereon according to an embodiment.
FIG. 16 is a schematic view illustrating an acoustic passage and a branch passage of the electronic device according to an embodiment.
FIG. 17A is a view illustrating measurement results of sound pressure levels depending on a presence or absence of a branch passage of an electronic device according to an embodiment, and FIG. 17B is an enlarged view of a dotted area in FIG. 17A.
In the following description made with respect to the accompanying drawings, identical or similar components will be assigned with identical or similar reference numerals.

### [Mode for Invention]

Hereinafter, various embodiments of the disclosure will be described with reference to accompanying drawings. Accordingly, those of ordinary skill in the art will recognize that modification, equivalent, and/or alternative on the various embodiments described herein can be variously made without departing from the scope and spirit of the disclosure.

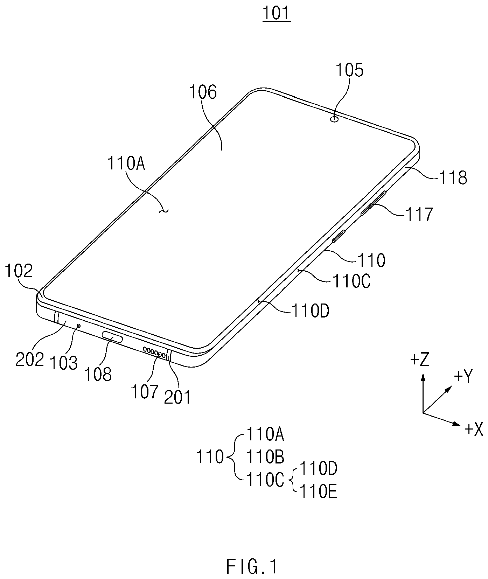

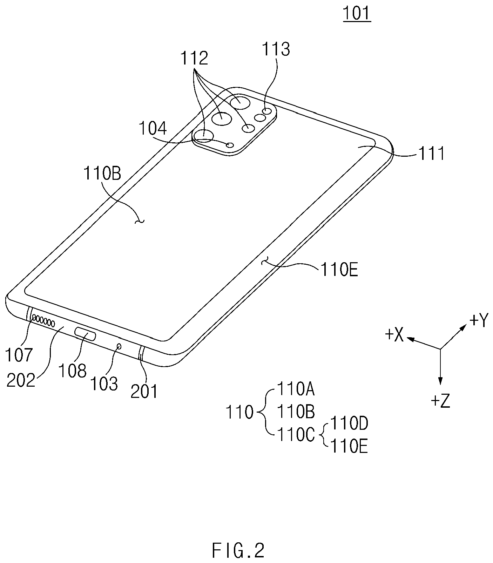

FIG. 1 illustrates a front view of an electronic device according to an embodiment, and FIG. 2 illustrates a rear view of an electronic device according to an embodiment.

Referring to FIGS. 1 and 2, an electronic device 101 may include a housing 110 including a first surface (or a front surface) 110A, a second surface (or a rear surface) 110B, and side surfaces 110C that surround a space between the first surface 110A and the second surface 110B.

In an embodiment (not illustrated), the housing 110 may refer to a structure that defines some of the first surface 110A, the second surface 110B, and the side surfaces 110C.

In an embodiment, the first surface 110A may be defined by a front plate 102 (e.g., a glass plate including various layers or a polymer plate), at least a portion of which is substantially transparent. The second surface 110B may be defined by a substantially opaque rear plate 111. The rear plate 111, for example, may be formed by coated or colored glass, ceramic, a polymer, a metal (e.g., aluminum, stainless steel (STS), or magnesium), or a combination of at least two of the materials. The side surfaces 110C may be coupled to the front plate 102 and the rear plate 111, and may be defined by side bezel structure (or "a frame structure or a side member") 118 including a metal and/or a polymer.

In an embodiment, the rear plate 111 and the side bezel structure 118 may be integrally formed, and may include the same material (e.g., a metallic material such as aluminum).

In the illustrated embodiment, the front plate 102 may include two first areas 110D that are deflected from a partial area of the first surface 110A toward the rear plate 111 and extend seamlessly. The first areas 110D may be located at opposite ends of a long edge of the front plate 102.

In the illustrated embodiment, the rear plate 111 may include two second areas 110E that are deflected from a partial area of the second surface 110B toward the front plate 102 and extend seamlessly. The second areas 110E may be located at opposite ends of a long edge of the rear plate 111.

In an embodiment, the front plate 102 (or the rear plate 111) may include only one of the first areas 110D (or the second areas 110E). Furthermore, in an embodiment, the front plate 102 (or the rear plate 111) may not include some of the first areas 110D (or the second areas 110E).

In an embodiment, when viewed from a lateral side of the electronic device 101, the side bezel structure 118 may have a first thickness (or a width) in a side direction (e.g., a short side), in which neither the first area 110D nor the second area 110E is included, and may have a second thickness that is smaller than the first thickness in a side direction (e.g., a long side), in which the first areas 110D or the second areas 110E are included.

In an embodiment, the electronic device 101 may include at least one of a display 106, audio modules 103 and 107, a sensor module (not illustrated), camera modules 105, 112, and 113, a key input device 117 (e.g., an input module), a light emitting element (not illustrated), and a connector hole 108. In an embodiment, the electronic device 101 may exclude at least one (e.g., the key input device 117 or the light emitting element (not illustrated)) of the components, or may further include another component.

In an embodiment, the display 106 may be visible through a corresponding portion of the front plate 102. For example, at least a portion of the display 106 may be visible through the front plate 102 including the first surface 110A, and the first areas 110D of the side surfaces 110C.

In an embodiment, a corner of the display 106 may have a shape that is substantially the same as an adjacent outer shape of the front plate 102. In an embodiment (not illustrated), to expand the visible area of the display 106, an interval between an outskirt of the display 106 and an outskirt of the front plate 102 may be formed to be substantially the same.

In an embodiment, a surface (or the front plate 102) of the housing 110 may include a screen display area that is formed as the display 106 is visible. For example, the screen display area may include the first surface 110A and the first areas 110D of the side surface.

In an embodiment (not illustrated), the screen display areas 110A and 110D may include a sensor area (not illustrated) that is configured to acquire biometric information of a user. Here, "the screen display areas 110A and 110D include the sensing area" may be understood that at least a portion of the sensing area may overlap the screen display areas 110A and 110D. For example, the sensor area (not illustrated) may refer, for example, to an area that may display visual information through the display 106 like the other areas of the screen display areas 110A and 110D and may additionally acquire biometric information (e.g., a fingerprint) of the user.

In an embodiment, the screen display areas 110A and 110D of the display 106 may include an area, through which the first camera module 105 (e.g., a punch hole camera) may be visually exposed. For example, at least a portion of a periphery of an area, in which the first camera module 105 is exposed, may be surrounded by the screen display areas 110A and 110D. In an embodiment, the first camera module 105 may include a plurality of camera modules.

In an embodiment (not illustrated), the display 106 may be coupled to or disposed to be adjacent to a touch detecting circuit, a pressure sensor that may measure an intensity (pressure) of a touch, and/or a digitizer that detects a stylus pen in a magnetic field scheme.

In an embodiment, the audio modules 103, 104, and 107 may include the microphone holes 103 and 104, and the speaker hole 107.

In an embodiment, the microphone holes 103 and 104 may include the first microphone hole 103 that is formed in a partial area of the side surface 110C and the second microphone hole 104 that is formed in a partial area of the second surface 110B. Microphones for acquiring external sound may be disposed in interiors of the microphone holes 103 and 104. The microphones may include a plurality of microphones to detect a direction of sound. In an embodiment, the second microphone hole 104 formed in a partial area of the second surface 110B may be disposed to be adjacent to the camera modules 105, 112, and 113. For example, the second microphone hole 104 may acquire sound when the camera modules 105, 112, and 113 are executed, or may acquire sound when another function is executed.

In an embodiment, the speaker hole 107 may include the external speaker hole 107 and a communication receiver hole (not illustrated). The external speaker hole 107 may be formed at a portion of the side surface 110C of the electronic device 101. In an embodiment, the external speaker hole 107 may be implemented by the microphone hole 103 in one hole. Although not illustrated, the communication receive hole (not illustrated) may be formed at another portion of the side surface 110C. For example, the communication receiver hole (not illustrated) may be formed at another portion (e.g., a portion that faces the +Y axis direction) of the side surface 110C, which faces a portion (e.g., a portion that faces the -Y axis direction) of the side surface 110C, at which the external speaker hole 107 is formed.

In an embodiment, the electronic device 101 may include a speaker that is communicated with the speaker hole 107. In an embodiment, the speaker may include a piezo speaker, in which the speaker hole 107 is omitted.

In an embodiment, the sensor module (not illustrated) may generate electrical signals or data values corresponding to an operation state of the interior of the electronic device 101 or an external environmental state. For example, the sensor module may include at least one of a proximity sensor, an HRM sensor, a fingerprint sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illumination sensor.

In an embodiment, the camera modules 105, 112, and 113 may include the first camera module 105 (e.g., the punch hole camera) that is exposed through the first surface 110A of the electronic device 101, the second camera module 112 that is exposed through the second surface 110B, and/or the flash 113.

In an embodiment, the first camera module 105 may be exposed through a portion of the screen display areas 110A and 110D of the display 106. For example, the first camera module 105 may be exposed through a partial area of the screen display areas 110A and 110D through an opening (not illustrated) formed at a portion of the display 106.

In an embodiment, the second camera module 112 may include a plurality of camera modules (e.g., a dual camera, a triple camera, or a quad camera). However, the second camera module 112 is not necessary limited to including the plurality of camera modules, and may include one camera module.

The first camera module 105 and the second camera module 112 may include one or a plurality of lenses, an image sensor, and/or an image signal processor. The flash 113, for example, may include a light emitting diode or a xenon lamp. In an embodiment, two or more lenses (an infrared ray camera lens, a wide angle lens, and a telescopic lens), and image sensors may be disposed on one surface of the electronic device 101.

In an embodiment, the key input device 117 may be disposed on the side surfaces 110C (e.g., the first areas 110D and/or the second areas 110E) of the housing 110. In an embodiment, the electronic device 101 may not include some or all of the key input devices 117, and the key input device 117 that is not included may be implemented in another form, such as a soft key. In an embodiment, the key input device may include a sensor module (not illustrated) that defines a sensing area (not illustrated) included in the screen display areas 110A and 110D.

In an embodiment, the connector hole 108 may accommodate a connector. The connector hole 108 may be disposed on the side surface 110C of the housing 110. For example, the connector hole 108 may be disposed on the side surface 110C to be adjacent to at least some of the audio modules (e.g., the microphone hole 103 and the speaker hole 107). In an embodiment, the electronic device 101 may include the first connector hole 108 that may accommodate a connector (e.g., a USB connector) for transmitting and receiving electric power and/or data to and from an external device, and/or a second connector hole (not illustrated) that may accommodate a connector (e.g., an earphone jack) for transmitting and receiving an audio signal to and from an external device.

In an embodiment, the electronic device 101 may include a light emitting element (not illustrated). For example, the light emitting element (not illustrated) may be disposed on the first surface 110A of the housing 110. The light emitting element (not illustrated) may provide state information of the electronic device 101 in a form of light. In an embodiment, the light emitting element (not illustrated) may provide a light source that interworks with an operation of the first camera module 105. For example, the light emitting element (not illustrated) may include an LED, an IR LED, and/or a xenon lamp.

In an embodiment, at least a portion of the side bezel structure 118 may serve as an antenna electrically connected with a communication module. According to an embodiment, the side bezel structure 118 may include a conductive portion 202 formed of a metallic material and a cut-off portion 201(or, non-conductive portion) formed of a non-metallic material (e.g., a polymer). According to an embodiment, at least part of the conductive portion 202 may be a radiator (e.g., an antenna) that is electrically connected with the communication module and that radiates an RF signal output from the communication module.

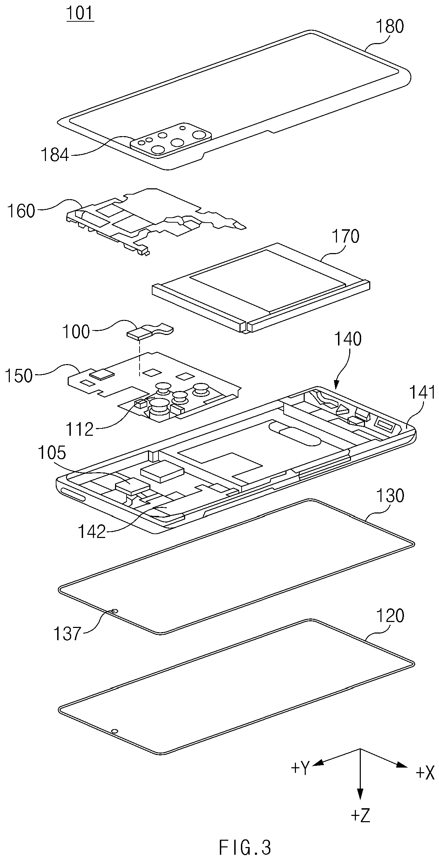

FIG. 3 is an exploded perspective view of the electronic device according to various embodiments.

Referring to FIG. 3, the electronic device 101 may include a front plate 120 (e.g., the front plate 102 of FIG. 1), a display 130 (e.g., the display 106 of FIG. 1), a bracket 140, a battery 170, a PCB 150, an RFPCB 100, a support member 160 (e.g., a rear case), and a rear plate 180 (e.g., the rear plate 111 of FIG. 2).

In an embodiment, the electronic device 101 may exclude at least one (e.g., the support member 160) from the components or may additionally include another component. At least one of the components of the electronic device 101 may be the same as or similar to at least one of the components of the electronic device 101 of FIGS. 1 and 2, and a repeated description thereof will be omitted hereinafter.

In an embodiment, at least some of the front plate 120, the rear plate 180, and the bracket 140 (e.g., a frame structure 141) may define the housing (e.g., the housing 110 of FIGS. 1 and 2).

In an embodiment, the bracket 140 may include the frame structure (or "the side member") 141 that defines a surface (e.g., a portion of the side surface 110C of FIG. 1) of the electronic device 101, and a plate structure 142 that extends from the frame structure 141 to an inside of the electronic device 101.

The plate structure 142 may be located in the interior of the electronic device 101, may be connected to the frame structure 141, or may be integrally formed with the frame structure 141. The plate structure 142, for example, may be formed of a metallic material and/or a nonmetallic material (e.g., a polymer). The display 130 may be coupled to one surface of the plate structure 142, and the PCB 150 may be coupled to a rear surface of the plate structure 142. A processor, a memory, and/or an interface may be mounted on the PCB 150. The processor, for example, may include one or more of a central processing device, an application processor, a graphic processing device, an image single processor, a sensor hub processor, or a communication processor.

The memory, for example, may include a volatile memory or a nonvolatile memory.

The interface, for example, may include a high definition multimedia interface (HDMI), a universal serial bus (USB), an interface, an SD card interface, and/or an audio interface. The interface, for example may electrically or physically connect the electronic device 101 to an external device, and may include a USB connector, an SD card/MMC connector, or an audio connector.

In an embodiment, the battery 170 may supply electric power to at least one of the components of the electronic device 101. For example, the battery 170 may include a primary battery that cannot be recharged, a secondary battery that may be recharged, or a fuel cell. In an embodiment, at least a portion of the battery 170 may be disposed on substantially the same plane as the PCB 150. In an embodiment, the battery 170 may be integrally disposed in the interior of the electronic device 101 or may be disposed to be attached to or detached from the electronic device 101.

In an embodiment, the first camera module 105 may be disposed in the plate structure 142 of the bracket 140 such that the lens is exposed through a partial area of the front plate 120 (e.g., the front surface 110A of FIG. 1) of the electronic device 101.

In an embodiment, the first camera module 105 may be disposed such that an optical axis of the lens is at least partially aligned with a hole or a recess 137 formed in the display 130. For example, the area, through which the lens is exposed, may be formed in the front plate 120. For example, the first camera module 105 may include a punch hole camera, at least a portion of which is disposed in an interior of the hole or the recess 137 formed on a rear surface of the display 130.

In an embodiment, the second camera module 112 may be disposed in the PCB 150 such that the lens is exposed through a camera area 184 of the rear plate 180 (e.g., the rear surface 110B of FIG. 2).

In an embodiment, the camera area 184 may be formed on a surface (e.g., the rear surface 110B of FIG. 2) of the rear plate 180. In an embodiment, the camera area 184 may be formed to be at least partially transparent such that external light is input to the lens of the second camera module 112. In an embodiment, at least a portion of the camera area 184 may protrude from the surface of the rear plate 180 by a specific height. However, the disclosure is not necessarily limited thereto, and the camera area 184 may define substantially the same plane as the surface of the rear plate 180.

The electronic device 101 according to various embodiments may include an electronic device such as a bar-type electronic device, a foldable electronic device, a rollable electronic device, a slidable electronic device, a wearable electronic device, a tablet PC, and/or a notebook PC. The electronic device 101 according to various embodiments of the disclosure may include various other electronic devices without being limited to the aforementioned examples.

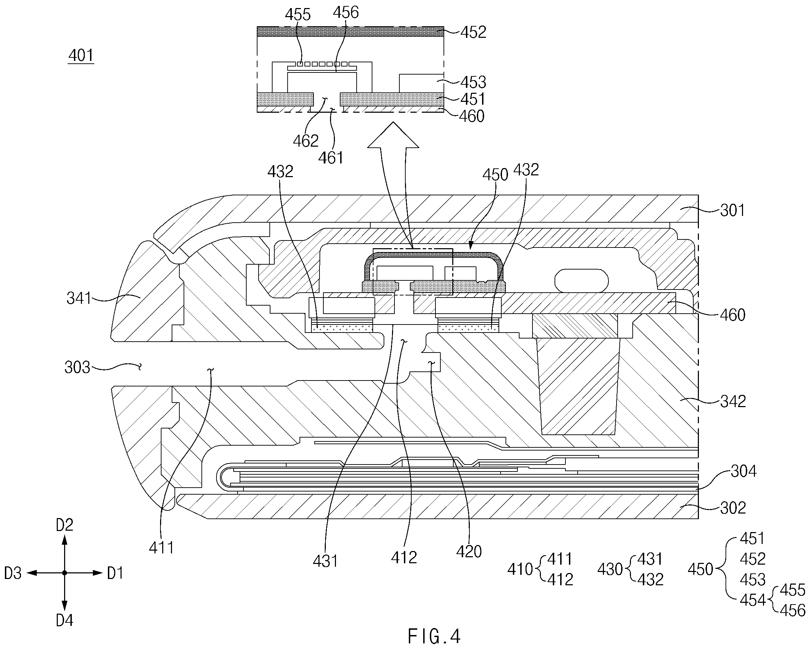

FIG. 4 is a sectional view of a portion of an electronic device according to an embodiment. The electronic device 401 illustrated in FIG. 4 may be at least partially similar to the electronic device 101 illustrated in FIG. 1 or may further include other embodiments.

Referring to FIG. 4, the electronic device 401 according to an embodiment may include a housing (e.g., the housing 110 of FIGS. 1 and 2), a support member 342 (e.g., the support member 160 of FIG. 3), and a printed circuit board 460 (e.g., the printed circuit board 150 of FIG. 3) and may include other embodiments in which at least some of the components are omitted or other components are added.

The housing may include a front plate (or, a front cover) 302, a back plate (or, a back cover) 301, or a side member 341. The front cover 302 may be disposed to face toward the front surface of the electronic device 401 (e.g., a surface facing in a fourth direction D4) through which a display 304 is visible. The back cover 301 may be disposed to face toward the rear surface of the electronic device 401 (e.g., a surface facing in a second direction D2). The side member 341 may surround the space between the front cover 302 and the back cover 301 and may be structurally coupled with the front cover 302 and the back cover 301. For example, the side member 341 may be integrally formed with the back cover 301 or may be integrally formed with the support member 342.

The support member 342 may extend from the side member 341 to the inside of the electronic device 401. The support member 342 may be integrally formed with the side member 341 or may be structurally coupled with the side member 341.

The support member 342 may provide an inner space between the back cover 301 coupled with the side member 341 and the support member 342. The printed circuit board 460 and a microphone module 450 may be disposed in the inner space between the support member 342 and the back cover 301. The support member 342 may support at least portions of the printed circuit board 460 and the microphone module 450 in the inner space of the electronic device 401.

The microphone module 450 may be disposed on the printed circuit board 460. The microphone module 450 may be electrically connected with a processor or a battery (e.g., the battery 170 of FIG. 3) through the printed circuit board 460.

According to an embodiment, the microphone module 450 may receive a sound (or, an acoustic signal) including at least one of a sound external to the electronic device 401 or a user's voice. For example, the electronic device 401 may receive a sound through a microphone hole (or, a through-hole) 303 formed in the side member 341. The microphone hole 303 may be formed to penetrate the side member in a first direction from the outer surface of the side member (e.g., a surface facing in a third direction) toward the inner surface of the side member (e.g., a surface facing in the first direction).

The microphone module 450 may include at least one microphone (or, an acoustic sensor) 454. For example, the microphone module 450 may include a micro electro mechanical system (MEMS) microphone. Hereinafter, the microphone module 450 including the MEMS microphone will be described as an example. The microphone module 450 may include a microphone substrate 451, a case 452, a signal processing circuit 453, and the microphone 454.

The microphone substrate 451 may be disposed on the printed circuit board 460. Each of the microphone substrate 451 and the printed circuit board 460 may include at least one inner hole 461 or 462. For example, the printed circuit board 460 may include the first inner hole 461 fluidically connected with an acoustic passage 410. The microphone substrate 451 may include the second inner hole 462 overlapping the first inner hole 461. The second inner hole 462 may be fluidically connected with the acoustic passage 410 through the first inner hole 461. The case 452 may be disposed to cover the microphone substrate 451 on which the acoustic sensor 454 and the signal processing circuit 453 are disposed. The acoustic sensor 454 and the signal processing circuit 453 may be accommodated in an acoustic cavity surrounded by the case 452 and the microphone substrate 451.

The acoustic sensor 454 may be disposed on the microphone substrate 451 to face toward the back plate 301. The acoustic sensor 454 may sense an acoustic signal introduced through the first inner hole 461 and the second inner hole 462 connected with the acoustic passage 410. The acoustic sensor 454 may be a transducer including a vibration plate 456 and a back plate (or, a fixed pole plate) 455. The vibration plate 456 may be vibrated by a sound. The back plate 455 may be spaced apart from the vibration plate 456 with a certain space therebetween.

The signal processing circuit 453 may be electrically connected with the acoustic sensor 454 on the microphone substrate 451. The signal processing circuit 453 may measure a voltage change occurring when the capacitance between the vibration plate 456 and the back plate 455 that move in reaction to a sound changes. The signal processing circuit 453 may convert an acoustic signal into an electrical signal.

According to an embodiment, a waterproof structure 430 may be disposed between the printed circuit board 460 and the support member 342. The waterproof structure 430 may include a waterproof member 431 and an adhesive member 432. The waterproof member 431 may be formed to allow air (e.g., a sound) to pass through and make it difficult for moisture and/or foreign matter to pass through. The waterproof member 431 may be disposed between a second section 412 of the acoustic passage 410 and the first inner hole 461 through the adhesive member 432 (e.g., a sponge tape or a Poron tape). For example, the waterproof member 431 may include Gore-tex, a non-woven fabric for waterproof, or a membrane. According to an embodiment, at least one of the waterproof member 431 or the adhesive member 432 may be disposed to overlap a branch passage 420.

According to an embodiment, the support member 342 may include the acoustic passage 410 and the branch passage 420. For example, at least one of the acoustic passage 410 or the branch passage 420 may be formed by perforating at least a partial area of the support member 342.

The acoustic passage 410 may be a path along which a sound passes between the inside and the outside of the electronic device 401. The acoustic passage 410 may extend from the microphone hole 303 of the side member 341 to the microphone module 450. A sound (or, audio) external to the electronic device may be introduced into the microphone module 450 through the microphone hole 303 of the side member 341, the acoustic passage 410 and the branch passage 420 of the support member 342, the first inner hole 461 of the printed circuit board 460, and the second inner hole 462 of the microphone substrate 451.

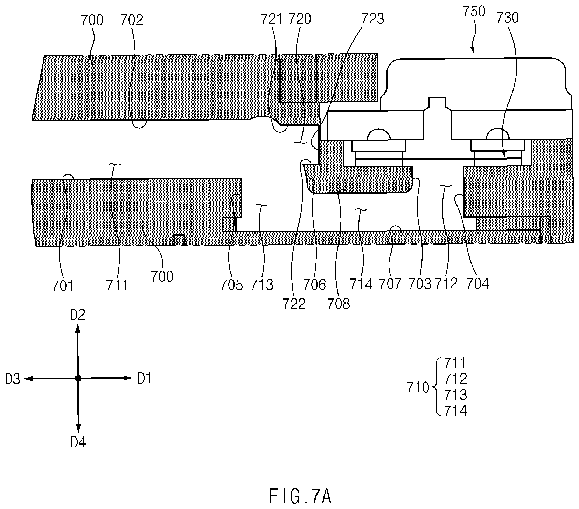

The acoustic passage 410 may extend from the outside of the electronic device 401 or the microphone hole 303 toward the microphone module 450 and may have a bent portion in at least a partial section. For example, the acoustic passage 410 may include at least two sections. For example, the acoustic passage may include a first section 411 and the second section 412. In another example, the acoustic passage may include a first section (e.g., a first section 711 of FIGS. 7A to 7F), a second section (e.g., a second section 712 of FIGS. 7A to 7F), a third section (e.g., a third section 713 of FIGS. 7A to 7F), and a fourth section (e.g., a fourth section 714 of FIGS. 7A to 7F).

The adjacent sections 411 and 412 of the acoustic passage 410 may be bent at a certain angle. For example, a portion bent at a first angle may be formed between the first section 411 and the second section 412. In another example, the first section 411 and the second section 412 may be bent at the first angle, and the second section 412 and a third section may be bent at a second angle. Each of the first angle and the second angle may be an acute angle, a right angle, or an obtuse angle, and the first angle may be equal to or different from the second angle. In another example, a smoothly bent portion rather than an angled portion may be formed between the sections.

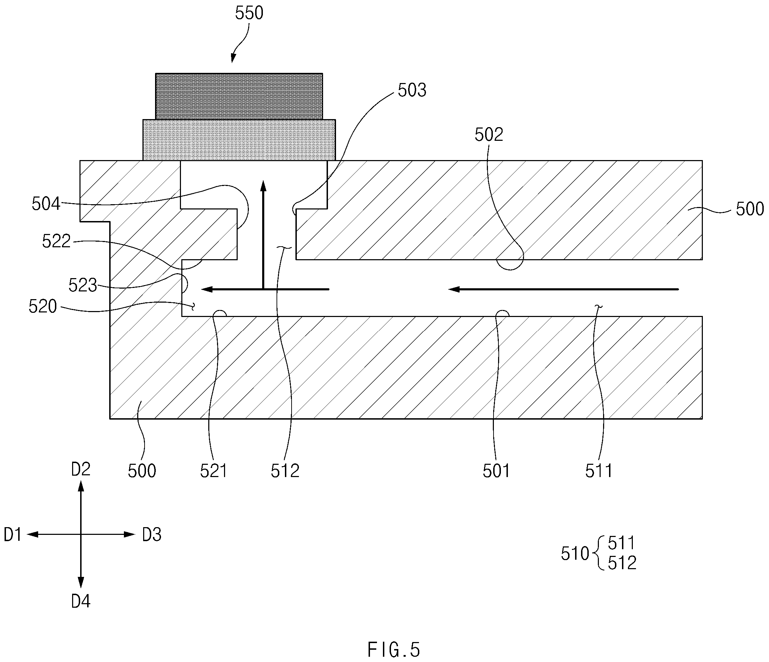

The branch passage 420 may be recessed from at least one of a plurality of inner surfaces of the support member 342 (e.g., inner surfaces 501, 502, 503, and 504 of FIG. 5) surrounding the acoustic passage 410 in a direction (e.g., the first direction D1) different from the second direction D2. The branch passage 420 may be formed to be an empty space in the support member 342. The branch passage 420 may be disposed to overlap the waterproof structure 430. The branch passage 420 may be disposed adjacent to the acoustic passage 410. The branch passage 420 may distribute the pressure of a sound received from the outside through the acoustic passage 410 to minimize stress applied to the vibration plate 456 of the microphone module 450. Accordingly, the robustness of the vibration plate 456 may be secured, and thus a defect due to damage to the vibration plate 456 may be minimized.

The branch passage 420 may be aligned with at least one of the inner holes 461 and 462 or the acoustic passage 410 irrespective of the shape of the microphone 454 and the position of the microphone 454. Accordingly, a mounting process and a sealing process of components included in the microphone module 450 may be facilitated, and damage to other components of the microphone module 450 (e.g., a wire electrically connecting each of the case 452, the microphone 454, and the microphone substrate 453 with the signal processing circuit 453) other than the vibration plate 456 may be prevented.

According to an embodiment, the branch passage 420 and the acoustic passage 410 may be formed through the same processing process or different processing processes. At least one of the branch passage 420 or the acoustic passage 410 may be formed through at least one of a drilling process or a processing process using a mold. The passages 410 and 420 formed through the drilling process may have a constant width. The passages 410 and 420 formed through the processing process using the mold may have a decreasing width farther away from an opening. The passages 410 and 420 formed through the processing process using the mold may have an inclined surface (or, a gradient surface). Since the passages 410 and 420 formed through the processing process using the mold have a smaller width than the passages 410 and 420 formed through the drilling process, a high frequency Fh by the support member 342 may be lowered.

For example, the first section 411 of the acoustic passage 410 may be formed through the drilling process, and the second section 412 of the acoustic passage 410 may be formed through the processing process using the mold. The branch passage 420 diverging in the same direction as the first section 411 may be formed through the drilling process.

FIG. 5 is a schematic view illustrating an acoustic passage and a branch passage of an electronic device according to an embodiment.

Referring to FIG. 5, the electronic device according to an embodiment may include a support member 500 (e.g., the support member 342 of FIG. 4) having the acoustic passage 510 and the branch passage 520.

The acoustic passage 510 may include a first section 511 and a second section 512. For example, the first section 511 and the second section 512 may be disposed in the shape of "L". The first section 511 may be fluidically connected with a microphone hole (e.g., the microphone hole 303 of FIG. 4). The first section 511 may extend from the microphone hole in the first direction D1. In the first section 511, the support member 500 may include the first inner surface 501 and the second inner surface 502 facing each other. The first inner surface 501 may face the second inner surface 502 in the second direction D2 with the first section 511 of the acoustic passage 510 therebetween. The first inner surface 501 may be formed to face in the second direction D2, and the second inner surface 502 may be formed to face in the fourth direction D4 opposite to the second direction D2.

The second section 512 may be bent from the first section 511 in the second direction D2 and may be fluidically connected with a microphone module 550. The second section 512 may extend from the first section 511 in the second direction D2. In the second section 512, the support member 500 may include the third inner surface 503 and the fourth inner surface 504 facing each other. The third inner surface 503 may face the fourth inner surface 504 in the first direction D1 with the second section 512 of the acoustic passage 510 therebetween. The third inner surface 503 may be bent from the second inner surface 502 and may face in the first direction D1 toward the inside of the electronic device. The fourth inner surface 504 may be formed to face toward the outside of the electronic device in the third direction D3 opposite to the first direction D1.

The branch passage 520 may diverge from the acoustic passage 510 at the position where a vibration plate (e.g., the vibration plate 456 of FIG. 4) and the acoustic passage 510 overlap each other. The branch passage 520 may diverge in the first direction D1 from at least one of a bent portion between the first section 511 and the second section 512, the first section 511, or the second section 512. In the branch passage 520, the support member 500 may include a first branch inner surface 521 and a second branch inner surface 522 facing each other. The first branch inner surface 521 may face the second branch inner surface 522 in the second direction D2 with the branch passage 520 therebetween. The first branch inner surface 521 may extend from the first inner surface 501 and may face in the second direction D2. The second branch inner surface 522 may be bent from the fourth inner surface 504 and may face in the direction opposite to the second direction D2.

For example, a branch bottom surface 523 may be formed between the first branch inner surface 521 and the second branch inner surface 522. The branch bottom surface 523 may be formed to face in the direction opposite to the first direction D1. In another example, the first branch inner surface 521 and the second branch inner surface 522 may be directly connected with each other without the branch bottom surface 523.

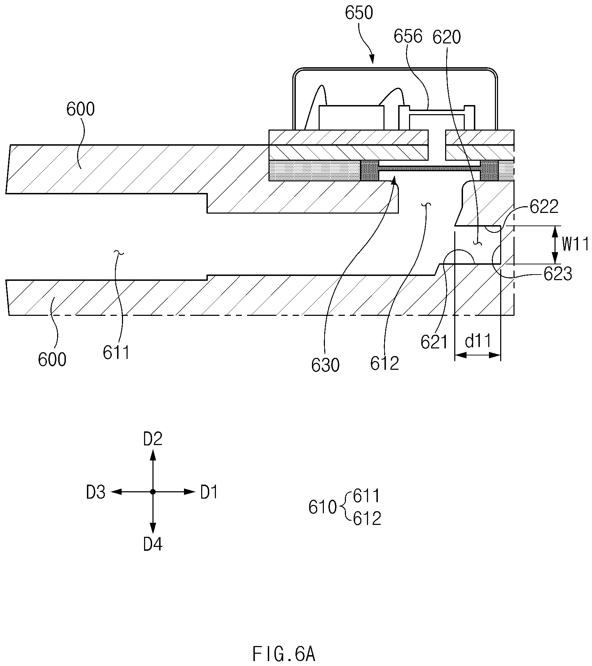

FIGS. 6A to 6C are views illustrating various embodiments of a branch passage of an electronic device according to an embodiment.

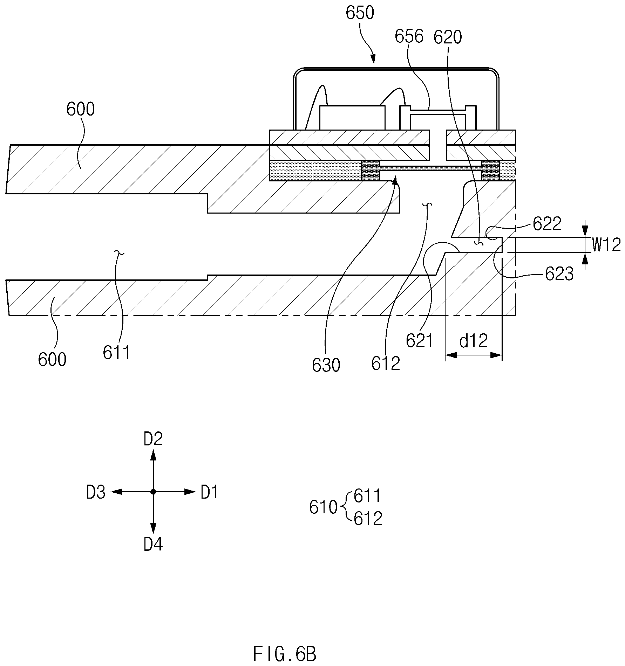

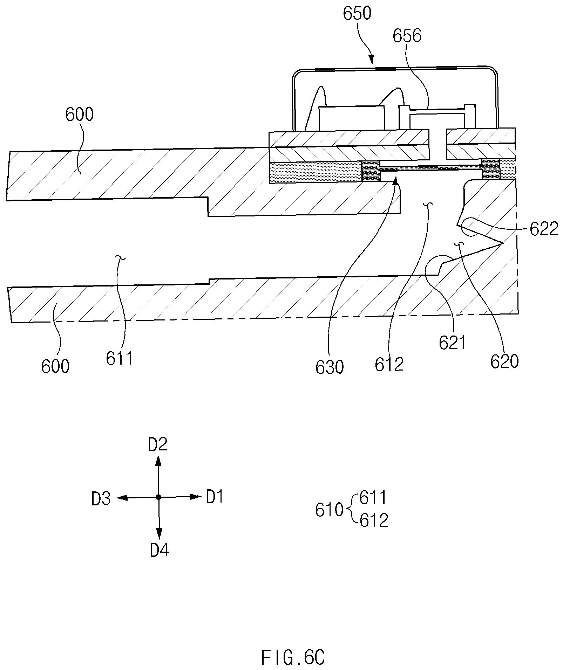

Referring to FIGS. 6A, 6B, and 6C, an acoustic passage 610 may include a first section 611 and a second section 612. The first section 611 may be formed in the first direction D1 and may extend into the inner space of the electronic device. The first section 611 may have a constant width or may have a width decreasing gradually or in a stepwise manner from the outside of the electronic device toward the inner space. The second section 612 may be formed in the second direction D2 and may extend toward a microphone module 650. The second section 612 may be disposed between the first section 611 and the microphone module 650. The second section 612 may be a section for fluidically connecting the first section 611 and the microphone module 650. The second section 612 may be disposed to be bent from the first section 611 in the second direction D2.

A branch passage 620 may diverge from the acoustic passage 610 at the position where a vibration plate 656 and the acoustic passage 610 overlap each other. The branch passage 620 may diverge from the acoustic passage 610 in the first direction D1. One side of the branch passage 620 may be open so as to be fluidically connected with the acoustic passage 610. An opposite side of the branch passage 620 may be closed by a support member 600. The branch passage 620 may overlap a portion of a waterproof structure 630 in the second direction D2. The branch passage 620 may have a volume less than the volume of at least one of the first section 611 or the second section 612 of the acoustic passage 610. The branch passage 620 may have a width less than or equal to the width of at least a portion of the first section 611 of the acoustic passage 610. The branch passage 620 may have a depth less than the depth of the first section 611 or the second section 612 of the acoustic passage 610. The width (or, diameter) and depth (or, length) of the branch passage 620 may be set in consideration of pneumatic and acoustic performance. For example, the length of the branch passage 620 may be set in the range of 50% to 200% of the diameter of the branch passage 620 or the length of the second section 612.

For example, the branch passage 620 illustrated in FIG. 6A may have a first depth d11 formed deep in the first direction D1 and a first width W11. The first width W11 of the branch passage 620 illustrated in FIG. 6A may be less than the width of at least a portion of the first section 611 of the acoustic passage 610. The first width W11 of the branch passage 620 may be similar to or greater than the first depth d11 of the branch passage 620. The branch passage 620 may be surrounded by a first branch inner surface 621, a second branch inner surface 622, and a branch bottom surface 623. The length of at least one of the first branch inner surface 621 or the second branch inner surface 622 may be equal to the first depth d11. The branch bottom surface 623 may be disposed between the first branch inner surface 621 and the second branch inner surface 622 and may have the first width W11.

For example, the branch passage 620 illustrated in FIG. 6B may have a second depth d12 formed deep in the first direction D1 and a second width W12. The second width W12 of the branch passage 620 illustrated in FIG. 6B may be less than the width of at least a portion of the first section 611 of the acoustic passage 610. The second width W12 of the branch passage 620 illustrated in FIG. 6B may be less than the second depth d12 of the branch passage. The branch passage 620 may be surrounded by a first branch inner surface 621, a second branch inner surface 622, and a branch bottom surface 623. The length of at least one of the first branch inner surface 621 or the second branch inner surface 622 may be equal to the second depth d12. The branch bottom surface 623 may be disposed between the first branch inner surface 621 and the second branch inner surface 622 and may have the second width W12.

For example, the branch passage 620 illustrated in FIG. 6C may have a second depth d12 formed deep in the first direction D1. The branch passage 620 illustrated in FIG. 6C may have a width decreasing gradually or in a stepwise manner farther away from the acoustic passage 610. For example, the branch passage 620 may be formed to be an empty space in a cone shape. The branch passage 620 may be surrounded by a first branch inner surface 621 and a second branch inner surface 622. The first branch inner surface 621 may be obliquely formed so as to get closer to the second branch inner surface 622 while getting farther away from the acoustic passage 610. The second branch inner surface 622 may be obliquely formed so as to get closer to the first branch inner surface 621 while getting farther away from the acoustic passage 610.

According to an embodiment, as the width (or, diameter) of the branch passage 620 is decreased, the high frequency Fh of a mechanical part (e.g., the support member 600) itself may be raised, and thus acoustic performance may be prevented from being deteriorated. For example, since the branch passages 620 of FIGS. 6B and 6C have a smaller width than the branch passage 620 of FIG. 6A, an Fh frequency by a mechanical structure may be raised, and thus Fh performance may be improved.

FIGS. 7A to 7F are views illustrating various embodiments of a branch passage of an electronic device according to an embodiment.

Referring to FIGS. 7A to 7F, an acoustic passage 710 may include the first section 711, the second section 712, the third section 713, and the fourth section 714.

The first section 711 may be formed in the first direction D1 and may extend into the inner space of the electronic device. The first section 711 may be surrounded by a first inner surface 701 and a second inner surface 702. The first inner surface 701 may be formed to face in the second direction D2, and the second inner surface 702 may be formed to face in the fourth direction D4 opposite to the second direction D2.

The second section 712 may be formed in the second direction D2 and may extend toward a microphone module 750 (e.g., the microphone module 450 of FIG. 4). The second section 712 may be surrounded by a third inner surface 703 and a fourth inner surface 704. The third inner surface 703 may be formed to face in the first direction D1, and the fourth inner surface 704 may be formed to face in the third direction D3 opposite to the first direction D1.

The third section 713 and the fourth section 714 may be disposed between the first section 711 and the second section 712 and may be formed in the shape of "L". The third section 713 may be disposed between the first section 711 and the fourth section 714. Between the first section 711 and the fourth section 714, the third section 713 may be disposed to be bent from the first section 711 and the fourth section 714. The third section 713 may extend from the first section 711 in the fourth direction D4 and may be fluidically connected with the fourth section 714. The third section 713 may be formed parallel to the second section 712. The third section 713 may be surrounded by a fifth inner surface 705 and a sixth inner surface 706. The fifth inner surface 705 may be formed to face in the first direction D1, and the sixth inner surface 706 may be formed to face in the third direction D3 opposite to the first direction D1.

The fourth section 714 may be disposed between the third section 713 and the second section 712. Between the third section 713 and the second section 712, the fourth section 714 may be disposed to be bent from the third section 713 and the second section 712. The fourth section 714 may extend from the third section 713 in the first direction D1 and may be fluidically connected with the second section 712. The fourth section 714 may be formed parallel to the first section 711. The fourth section 714 may be surrounded by a seventh inner surface 707 and an eighth inner surface 708. The seventh inner surface 707 may be formed to face in the second direction D2, and the eighth inner surface 708 may be formed to face in the fourth direction D4 opposite to the second direction D2.

A branch passage 720 may diverge from the acoustic passage 710 in the first direction D1. At least one inner surface facing in the third direction D3 among the first to eighth inner surfaces 701 to 708 of the acoustic passage may be recessed to form the branch passage 720. For example, at least one of the fourth inner surface 704 or the sixth inner surface 706 that faces in the third direction D3 opposite to the first direction D1 may be recessed to form the branch passage 720.

One side of the branch passage 720 may be open so as to be fluidically connected with the acoustic passage 710. An opposite side of the branch passage 720 may be closed by a support member 700. The branch passage 720 may overlap at least a portion of a waterproof structure 730 in the first direction D1 or the third direction D3.

The branch passage 720 may have a volume less than the volume of at least one of the first section 711, the second section 712, the third section 713, or the fourth section 714 of the acoustic passage 710. The branch passage 720 may have a width less than or equal to the width of at least a portion of at least one of the first section 711, the second section 712, the third section 713, or the fourth section 714 of the acoustic passage 710. The branch passage 720 may have a depth less than the depth of at least one of the first section 711, the second section 712, the third section 713, or the fourth section 714 of the acoustic passage 710. The width (or, diameter) and depth (or, length) of the branch passage 720 may be set in consideration of pneumatic and acoustic performance. For example, the length of the branch passage 720 may be set in the range of 50% to 200% of the diameter of the branch passage 720 or the length of the second section 712.

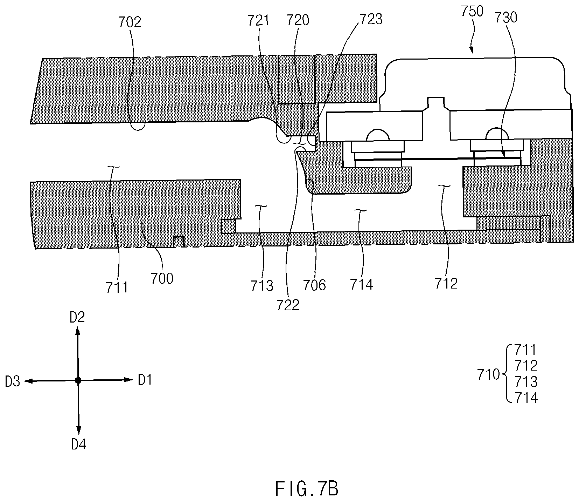

According to an embodiment, the branch passages 720 illustrated in FIGS. 7A and 7B may have a depth formed deep in the first direction D1 and a certain width. For example, the width of the branch passage 720 illustrated in FIG. 7A may be similar to or greater than the depth of the branch passage 720. In another example, the width of the branch passage 720 illustrated in FIG. 7B may be less than the depth of the branch passage 720. The branch passages 720 illustrated in FIGS. 7A and 7B may be recessed from at least a portion of the sixth inner surface 706 in the first direction D1. The branch passages 720 may be surrounded by a first branch inner surface 721, a second branch inner surface 722, and a branch bottom surface 723. The first branch inner surface 721 may extend from the second inner surface 702 in the first direction D1 or may be bent from a portion of the sixth inner surface 706 and formed in the first direction D1. The second branch inner surface 722 may be bent from another portion of the sixth inner surface 706 and may be formed in the first direction D1. The second branch inner surface 722 may be disposed to face the first branch inner surface 721. The branch bottom surface 723 may be disposed between the first branch inner surface 721 and the second branch inner surface 722. The branch bottom surface 723 may overlap at least a portion of a side surface (e.g., a surface facing in the third direction D3) of the waterproof structure 730 in the first direction D1.

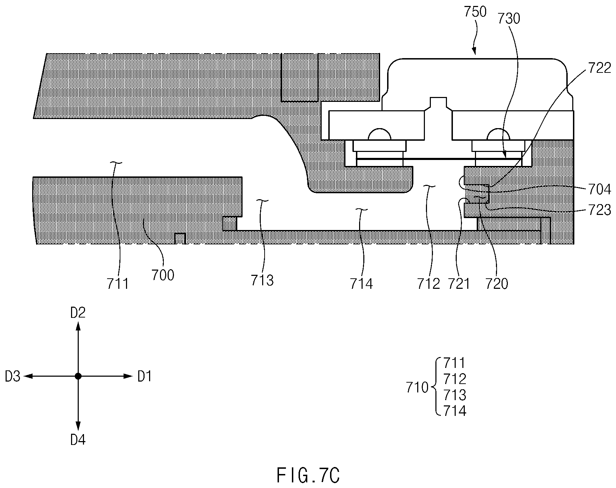

According to an embodiment, the branch passage 720 illustrated in FIG. 7C may be recessed from at least a portion of the fourth inner surface 704 in the first direction D1. The first branch inner surface 721 of the branch passage 720 illustrated in FIG. 7C may be bent from a portion of the fourth inner surface 704 and may be formed in the first direction D1. The second branch inner surface 722 may be disposed to face the first branch inner surface 721. The second branch inner surface 722 may be bent from another portion of the fourth inner surface 704 and may be formed in the first direction D1. The branch bottom surface 723 may be disposed between the first branch inner surface 721 and the second branch inner surface 722. The first branch inner surface 721 and the second branch inner surface 722 may overlap one surface (e.g., a surface facing in the fourth direction D4) of the waterproof structure 730 in the second direction D2.

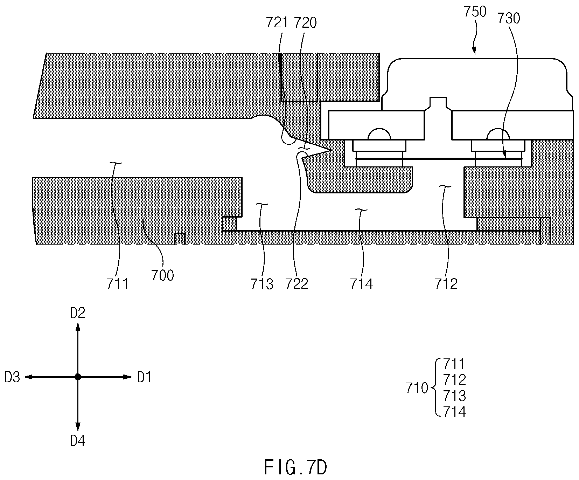

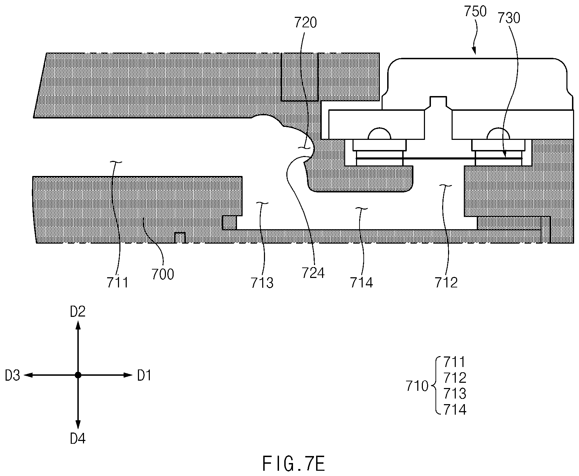

According to an embodiment, the branch passages 720 illustrated in FIGS. 7D and 7E may be recessed from at least a portion of at least one of the fourth inner surface 704 or the sixth inner surface 706 in the first direction D1. For example, the branch passages 720 may be recessed from at least a portion of the sixth inner surface 706 in the first direction D1. The branch passages 720 may have a width decreasing gradually or in a stepwise manner farther away from the acoustic passage 710.

For example, as illustrated in FIG. 7D, the branch passage 720 may be surrounded by a first branch inner surface 721 and a second branch inner surface 722. The first branch inner surface 721 may be obliquely formed so as to get closer to the second branch inner surface 722 while getting farther away from the acoustic passage 710. The second branch inner surface 722 may be obliquely formed so as to get closer to the first branch inner surface 721 while getting farther away from the acoustic passage 710. For example, the branch passage 720 may be formed in the shape of a hollow cone.

In another example, the branch passage 720 illustrated in FIG. 7E may be surrounded by a branch inner surface 724, at least a portion of which has a curvature. For example, the branch passage 720 may be formed in the shape of a hollow hemisphere.

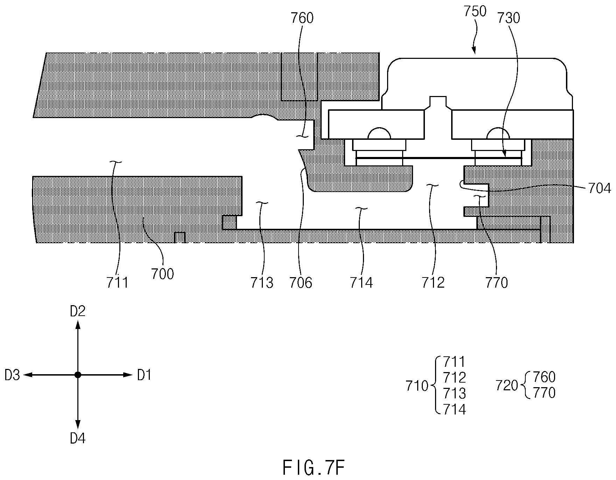

According to an embodiment, the branch passage 720 illustrated in FIG. 7F may include a plurality of branch passages. For example, the branch passage 720 may include a first branch passage 760 and a second branch passage 770. The first branch passage 760 may be recessed from the sixth inner surface 706 in the first direction D1. The second branch passage 770 may be recessed from the fourth inner surface 704 in the first direction D1. At least one of the first branch passage 760 or the second branch passage 770 may be formed in the shape of a polygonal prism or a circular cylinder that is open toward the acoustic passage 710 as illustrated in FIGS. 7A and 7B, in the shape of a cone that is open toward the acoustic passage 710 as illustrated in FIG. 7C, or in the shape of a hemisphere that is open toward the acoustic passage 710 as illustrated in FIG. 7D. The first branch passage 760 and the second branch passage 760 may be formed in the same shape or different shapes. The first branch passage 760 and the second branch passage 770 may have the same volume or different volumes. For example, the first branch passage 760 and the second branch passage 770 may have the same depth or different depths.

According to an embodiment, as the width (or, diameter) of the branch passage 720 is decreased, the high frequency Fh of a mechanical part (e.g., the support member 700) itself may be raised, and thus acoustic performance may be prevented from being deteriorated. For example, since the branch passages 720 of FIGS. 7C and 7D have a smaller width than the branch passage 720 of FIG. 7A, an Fh frequency by a mechanical structure may be raised, and thus Fh performance may be improved.

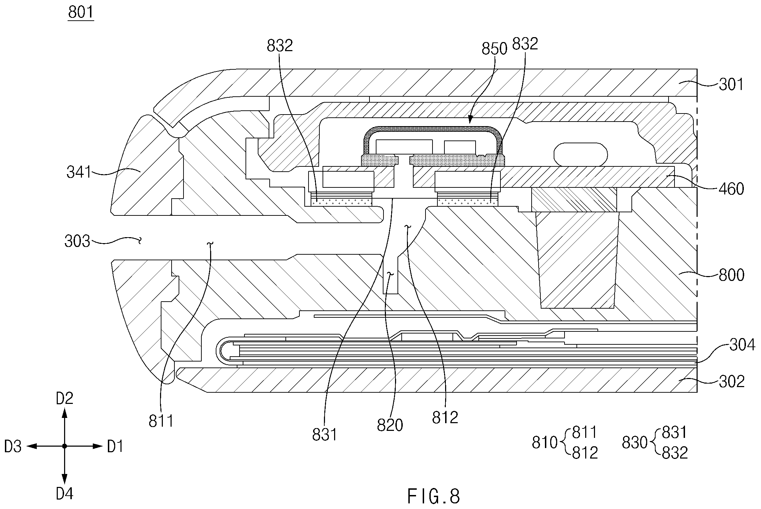

FIG. 8 is a sectional view of a portion of an electronic device according to an embodiment. The electronic device 801 illustrated in FIG. 8 may be at least partially similar to the electronic device 101 illustrated in FIG. 3 or may further include other embodiments.

Referring to FIG. 8, the electronic device 801 according to an embodiment may include a support member 800 (e.g., the support member 400 of FIG. 4) extending from a side member 341 to the inside of the electronic device 801. The support member 800 may provide an inner space between a back cover 301 coupled with the side member 341 and the support member 800. A printed circuit board 460 and a microphone module 850 may be disposed in the inner space between the support member 800 and the back cover 301. The microphone module 850 may receive at least one of a sound external to the electronic device 801 or a user's voice through a microphone hole (or, a through-hole) 303 formed in the side member 341, an acoustic passage 810, and a branch passage 820.

According to an embodiment, a waterproof structure 830 (e.g., the waterproof structure 430 of FIG. 4) may be disposed between the printed circuit board 460 and the support member 800. The waterproof structure 830 may include a waterproof member 831 and an adhesive member 832. The waterproof member 831 may be disposed between a second section 812 of the acoustic passage 810 and the microphone module 850 through the adhesive member 832 (e.g., a sponge tape or a Poron tape). At least one of the waterproof member 831 or the adhesive member 832 may be disposed to overlap the branch passage 820.

According to an embodiment, the support member 800 may include the acoustic passage 810 and the branch passage 820. For example, at least one of the acoustic passage 810 or the branch passage 820 may be formed by perforating at least a partial area of the support member 800.

The acoustic passage 810 may be a path along which a sound passes between the inside and the outside of the electronic device 801. The acoustic passage 810 may extend from the microphone hole 303 of the side member 341 to the microphone module 850. A sound (or, audio) external to the electronic device may be introduced into the microphone module 850 through the microphone hole 303 of the side member 341 and the acoustic passage 810 and the branch passage 820 of the support member 800.

The acoustic passage 810 may extend from the outside of the electronic device 801 or the microphone hole 303 toward the microphone module 850 and may have a bent portion in at least a partial section. For example, the acoustic passage 810 may include at least two sections. For example, the acoustic passage may include a first section 811 and the second section 812.

The branch passage 820 may diverge from the acoustic passage 810 in the fourth direction opposite to the second direction. The branch passage 820 may be formed to be an empty space in the support member 800. The branch passage 820 may be disposed to overlap the waterproof structure 830 in the second direction D2. At least a portion of the branch passage 820 may overlap the waterproof member 831 of the waterproof structure 830. The branch passage 820 may be disposed on the same virtual vertical line with at least one of the waterproof structure 830 or a vibration plate (e.g., the vibration plate 456 of FIG. 4). The branch passage 820 may distribute the pressure of a sound received from the outside through the acoustic passage 810 to minimize stress applied to the vibration plate of the microphone module 850 (e.g., the vibration plate 456 of FIG. 4). Accordingly, the robustness of the vibration plate may be secured, and thus a defect due to damage to the vibration plate may be minimized.

According to an embodiment, the branch passage 820 and the acoustic passage 810 may be formed through the same processing process or different processing processes. At least one of the branch passage 820 or the acoustic passage 810 may be formed through at least one of a drilling process or a processing process using a mold. For example, the first section 811 of the acoustic passage 810 may be formed through the drilling process, and the second section 812 of the acoustic passage 810 may be formed through the processing process using the mold. The branch passage 820 diverging in the same direction as the second section 812 may be formed through the processing process using the mold.

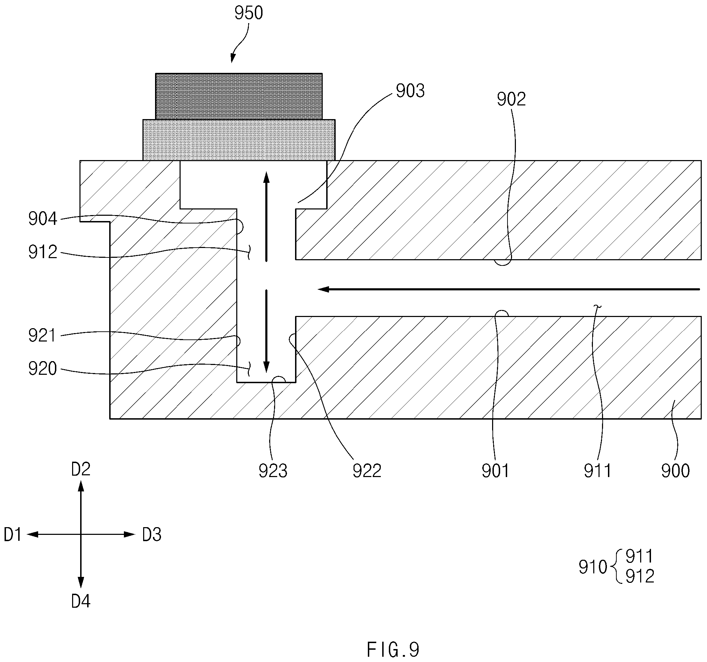

FIG. 9 is a schematic view illustrating an acoustic passage and a branch passage of an electronic device according to an embodiment.

Referring to FIG. 9, the electronic device according to an embodiment may include a support member 900 (e.g., the support member 800 of FIG. 8) having the acoustic passage 910 and the branch passage 920.

The acoustic passage 910 may include a plurality of acoustic sections. For example, the acoustic passage 910 may include a first section 911 (e.g., the first section 511 of FIG. 5) and a second section 912 (e.g., the second section 512 of FIG. 5). The first section 911 may be surrounded by a first inner surface 901 and a second inner surface 902. The second section 912 may be surrounded by a third inner surface 903 and a fourth inner surface 904.

The branch passage 920 may diverge from the acoustic passage 910 at the position where a vibration plate (e.g., the vibration plate 456 of FIG. 4) and the acoustic passage 910 overlap each other. The branch passage 920 may diverge from the acoustic passage 910 in the fourth direction D4 opposite to the second direction D2. The branch passage 920 may diverge in the fourth direction D4 from at least one of a bent portion between the first section 911 and the second section 912, the first section 911, or the second section 912.

At least one inner surface facing in the second direction D2 among the plurality of inner surfaces 901, 902, 903, and 904 of the acoustic passage 910 may be recessed to form the branch passage 920. For example, the first inner surface 901 facing in the second direction D2 may be recessed to form the branch passage 920.

The branch passage 920 may have a volume less than the volume of at least one of the first section 911 or the second section 912 of the acoustic passage 910. The branch passage 920 may have a width less than or equal to the width of at least a portion of at least one of the first section 911 or the second section 912 of the acoustic passage 910. The branch passage 920 may have a depth less than the depth of the first section 911 or the second section 912 of the acoustic passage 910.

The branch passage 920 may include a first branch inner surface 921 and a second branch inner surface 922. The first branch inner surface 921 may extend from the fourth inner surface 904 and may face in the third direction D3 opposite to the first direction D1. The second branch inner surface 922 may be bent from the first inner surface 901 and may face in the first direction D1. The second branch inner surface 922 may be formed to face the first branch inner surface 921 with the branch passage 920 therebetween. For example, a branch bottom surface 923 may be formed between the first branch inner surface 921 and the second branch inner surface 922. The branch bottom surface 923 may be formed to face in the second direction D2. In another example, the first branch inner surface 921 and the second branch inner surface 922 may be directly connected with each other without the branch bottom surface 923.

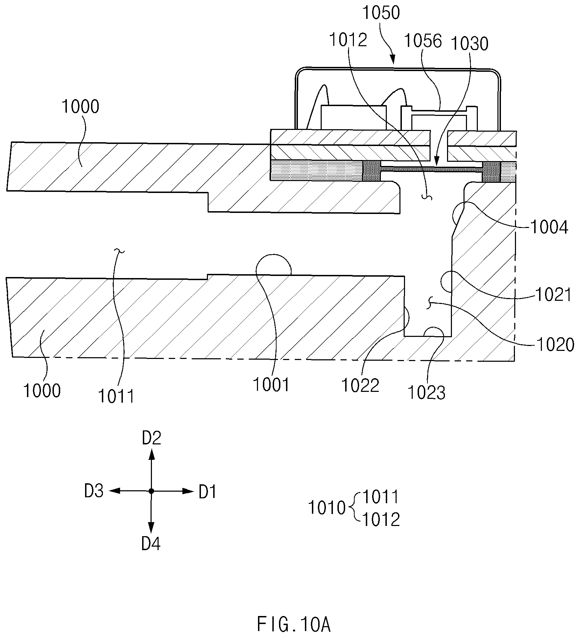

FIGS. 10A to 10C are views illustrating various embodiments of a branch passage of an electronic device according to an embodiment.

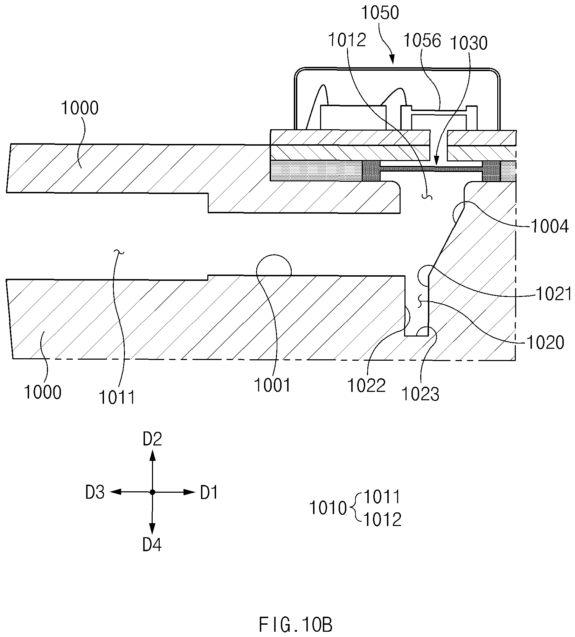

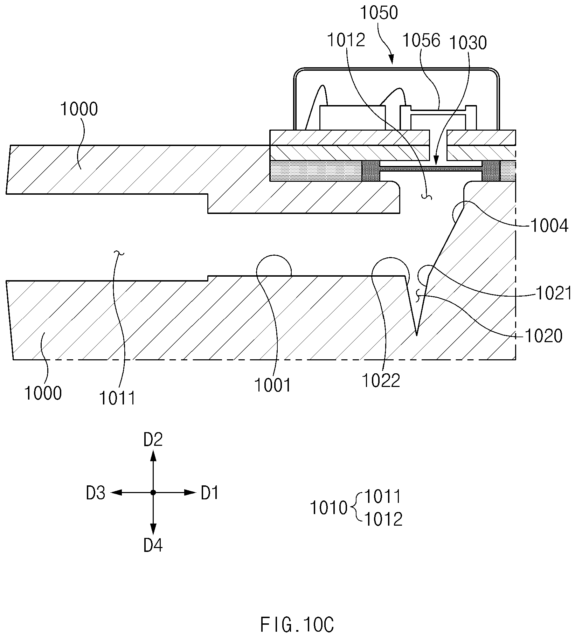

Referring to FIGS. 10A, 10B, and 10C, an acoustic passage 1010 may include a first section 1011 and a second section 1012. The first section 1011 may be formed in the first direction D1 and may extend into the inner space of the electronic device. The first section 1011 may have a constant width or may have a width decreasing gradually or in a stepwise manner from the outside of the electronic device toward the inner space. The second section 1012 may be formed in the second direction D2 and may extend toward a microphone module 1050. The second section 1012 may be disposed between the first section 1011 and the microphone module 1050. The second section 1012 may be a section for fluidically connecting the first section 1011 and the microphone module 1050. The second section 1012 may be disposed to be bent from the first section 1011 in the second direction D2.

A branch passage 1020 may diverge from the acoustic passage 1010 in a direction different from the second direction D2 at the position where a vibration plate 1056 and the acoustic passage 1010 overlap each other. The branch passage 1020 may diverge from the acoustic passage 1010 at least once such that at least one branch passage is formed in a support member 1000. The width (or, diameter) and depth (or, length) of the branch passage 1020 may be set in consideration of pneumatic and acoustic performance. For example, the length of the branch passage 1020 may be set in the range of 50% to 200% of the diameter of the branch passage 1020 or the length of the second section 1012.

According to an embodiment, the branch passages 1020 illustrated in FIGS. 10A and 10B may have a depth formed deep in the fourth direction D4 opposite to the second direction D2 and a certain width. For example, the width of the branch passage 1020 illustrated in FIG. 10A may be similar to or greater than the depth of the branch passage 1020. In another example, the width of the branch passage 1020 illustrated in FIG. 10B may be less than the depth of the branch passage 1020. The branch passages 1020 illustrated in FIGS. 10A and 10B may be recessed in the fourth direction D4 from at least a portion of a first inner surface 1001 facing in the second direction D2. The branch passages 1020 may be surrounded by a first branch inner surface 1021, a second branch inner surface 1022, and a branch bottom surface 1023. The first branch inner surface 1021 may extend from a fourth inner surface 1004 in the fourth direction D4 and may be bent from the fourth inner surface 1004. The second branch inner surface 1022 may be bent from the first inner surface 1001 and may extend in the fourth direction D4. The second branch inner surface 1022 may be disposed to face the first branch inner surface 1021. The branch bottom surface 1023 may be disposed between the first branch inner surface 1021 and the second branch inner surface 1022. The branch bottom surface 1023 may be formed to face in the second direction D2. The branch bottom surface 1023 may overlap a waterproof member of a waterproof structure 1030 in the second direction D2.

According to an embodiment, the branch passage 1020 illustrated in FIG. 10C may be recessed from at least a portion of the first inner surface 1001 in the fourth direction D4. The branch passage 1020 may have a width decreasing gradually or in a stepwise manner farther away from the acoustic passage 1010. The branch passage 1020 may be surrounded by a first branch inner surface 1021 and a second branch inner surface 1022. The first branch inner surface 1021 may be obliquely formed so as to get closer to the second branch inner surface 1022 while getting farther away from the acoustic passage 1010. The second branch inner surface 1022 may be obliquely formed so as to get closer to the first branch inner surface 1021 while getting farther away from the acoustic passage 1010.

According to an embodiment, the branch passage 1020 may be formed in the shape of a polygonal prism or a circular cylinder that is open toward the acoustic passage 1010 as illustrated in FIGS. 10A and 10B, in the shape of a cone that is open toward the acoustic passage 1010 as illustrated in FIG. 10C, or in the shape of a hemisphere that is open toward the acoustic passage 1010.

According to an embodiment, as the width (or, diameter) of the branch passage 1020 is decreased, the high frequency Fh of a mechanical part (e.g., the support member 1000) itself may be raised, and thus acoustic performance may be prevented from being deteriorated. For example, since the branch passages 1020 of FIGS. 10B and 10C have a smaller width than the branch passage 1020 of FIG. 10A, an Fh frequency by a mechanical structure may be raised, and thus Fh performance may be improved. For example, the Fh frequency by the support member 1000 having the branch passage 1020 of FIG. 10A may be 7.21kHz, whereas the Fh frequency by the support member 1000 having the branch passage 1020 of FIG. 10B may be 7.90kHz and the Fh frequency by the support member 1000 having the branch passage 1020 of FIG. 10C may be 7.68kHz.

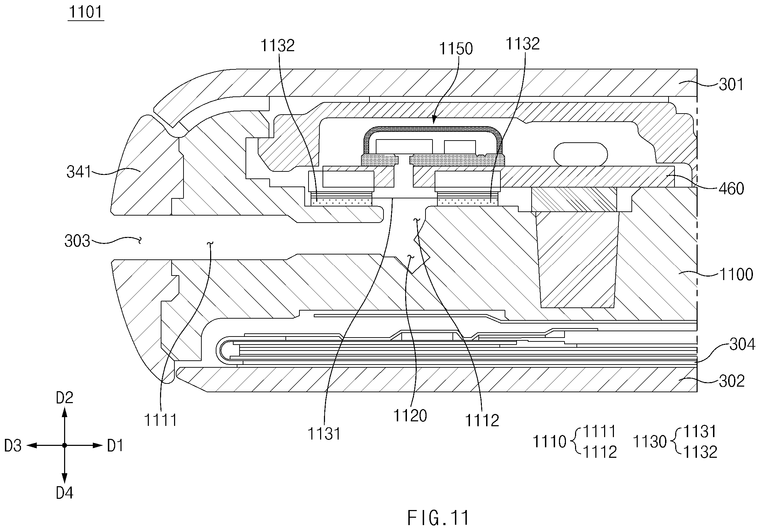

FIG. 11 is a sectional view of a portion of an electronic device 1101 according to an embodiment. The electronic device 1101 illustrated in FIG. 11 may be at least partially similar to the electronic device 101 illustrated in FIG. 3 or may further include other embodiments.

Referring to FIG. 11, the electronic device 1101 according to an embodiment may include a support member 1100 (e.g., the support member 400 of FIG. 4) extending from a side member 341 to the inside of the electronic device 1101. The support member 1100 may include an acoustic passage 1110 and a branch passage 1120. For example, at least one of the acoustic passage 1110 or the branch passage 1120 may be formed by perforating at least a partial area of the support member 1100.

The acoustic passage 1110 may be a path along which a sound passes between the inside and the outside of the electronic device 1101. The acoustic passage 1110 may extend from a microphone hole 303 of the side member to a microphone module 1150. A sound (or, audio) external to the electronic device may be introduced into the microphone module 1150 through the microphone hole 303 of the side member 341 and the acoustic passage 1110 and the branch passage 1120 of the support member 1100.

The acoustic passage 1110 may extend from the outside of the electronic device 1101 or the microphone hole 303 toward the microphone module 1150 and may have a bent portion in at least a partial section. For example, the acoustic passage 1110 may include at least two sections. For example, the acoustic passage 1110 may include a first section 1111 and a second section 1112.

The branch passage 1120 may be formed to be an empty space in the support member 1100. The branch passage 1120 may diverge from the acoustic passage 1110 in a direction different from at least one of the first to fourth directions D1 to D4. The branch passage 1120 may be disposed to overlap at least one of a waterproof member 1131 or an adhesive member 1132 of a waterproof structure 1130. At least a portion of the branch passage 1120 may overlap the waterproof member 1131 of the waterproof structure 1130. The branch passage 1120 may distribute the pressure of a sound received from the outside through the acoustic passage 1110 to minimize stress applied to a vibration plate of the microphone module 1150 (e.g., the vibration plate 456 of FIG. 4). Accordingly, the robustness of the vibration plate may be secured, and thus a defect due to damage to the vibration plate may be minimized.

According to an embodiment, the branch passage 1120 and the acoustic passage 1110 may be formed through the same processing process or different processing processes. At least one of the branch passage 1120 or the acoustic passage 1110 may be formed through at least one of a drilling process or a processing process using a mold.

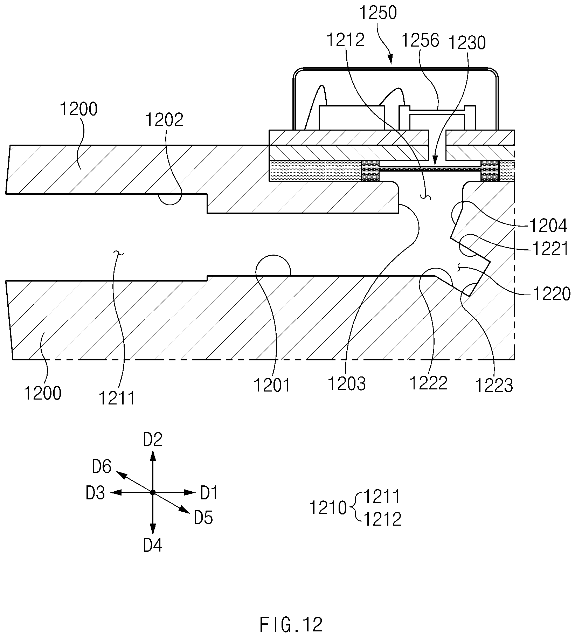

FIG. 12 is a schematic view illustrating an acoustic passage and a branch passage of an electronic device according to an embodiment.

Referring to FIG. 12, the electronic device according to an embodiment may include a support member 1200 (e.g., the support member 342 of FIG. 4) having the acoustic passage 1210 and the branch passage 1220.

The acoustic passage 1210 may include a plurality of acoustic sections. For example, the acoustic passage 1210 may include a first section 1211 (e.g., the first section 1111 of FIG. 11) and a second section 1212 (e.g., the second section 1112 of FIG. 11). The first section 1211 may be surrounded by a first inner surface 1201 and a second inner surface 1202. The second section 1212 may be surrounded by a third inner surface 1203 and a fourth inner surface 1204.

The branch passage 1220 may diverge from the acoustic passage 1210 at the position where a vibration plate 1256 and the acoustic passage 1210 overlap each other. Between the first direction D1 and the fourth direction D4, the branch passage 1220 may diverge from the acoustic passage 1210 in a fifth direction D5 inclined with respect to at least one of the first direction D1 or the fourth direction D4. The branch passage 1220 may diverge in the fifth direction D5 from at least one of a bent portion between the first section 1211 and the second section 1212, the first section 1211, or the second section 1212.

At least one inner surface among the plurality of inner surfaces 1201, 1202, 1203, and 1204 of the acoustic passage 1210 may be recessed in the fifth direction D5 to form the branch passage 1220. For example, a portion of the first inner surface 1201 facing in the second direction D2 and a portion of the fourth inner surface 1204 facing in the third direction D3 may be recessed in the fifth direction to form the branch passage 1220.

The branch passage 1220 may have a volume less than the volume of at least one of the first section 1211 or the second section 1212 of the acoustic passage 1210. The branch passage 1220 may have a width less than or equal to the width of at least a portion of at least one of the first section 1211 or the second section 1212 of the acoustic passage 1210. The branch passage 1220 may have a depth less than the depth of the first section 1211 or the second section 1212 of the acoustic passage 1210. The width (or, diameter) and depth (or, length) of the branch passage 1220 may be set in consideration of pneumatic and acoustic performance. For example, the length of the branch passage 1220 may be set in the range of 50% to 200% of the diameter of the branch passage 1220 or the length of the second section 1212.

The branch passage 1220 may include a first branch inner surface 1221 and a second branch inner surface 1222. The first branch inner surface 1221 may be bent from the fourth inner surface 1204 in the fifth direction D5. The second branch inner surface 1222 may be bent from the first inner surface 1201 in the fifth direction D5. The second branch inner surface 1222 may be formed to face the first branch inner surface 1221 with the branch passage 1220 therebetween. For example, a branch bottom surface 1223 may be formed between the first branch inner surface 1221 and the second branch inner surface 1222. The branch bottom surface 1223 may be formed to face in a sixth direction D6 opposite to the fifth direction D5. In another example, the first branch inner surface 1221 and the second branch inner surface 1222 may be directly connected with each other without the branch bottom surface 1223.

According to an embodiment, the branch passage 1220 may be formed in the shape of a polygonal prism or a circular cylinder that is open toward the acoustic passage 1210 as illustrated in FIG. 12, in the shape of a cone that is open toward the acoustic passage 1210, or in the shape of a hemisphere that is open toward the acoustic passage 1210.

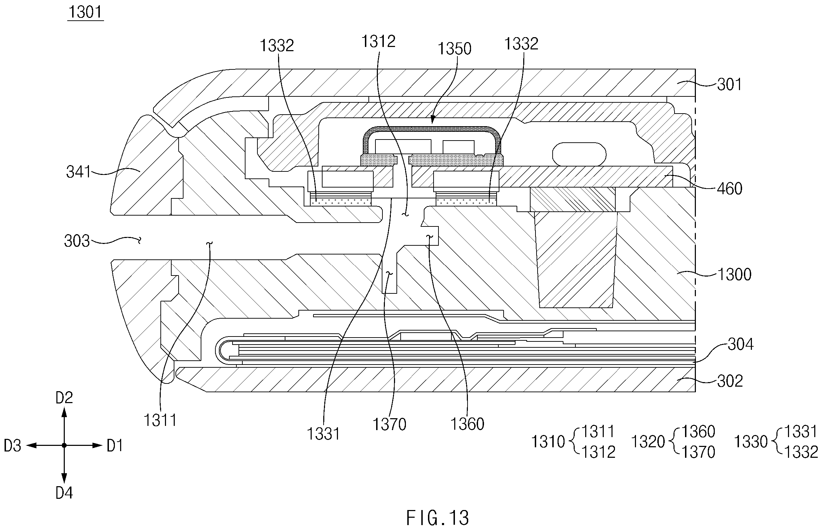

FIG. 13 is a sectional view of a portion of an electronic device according to an embodiment. The electronic device 1301 illustrated in FIG. 13 may be at least partially similar to the electronic device 101 illustrated in FIG. 3 or may further include other embodiments.

Referring to FIG. 13, the electronic device 1301 according to an embodiment may include a support member 1300 extending from a side member 341 to the inside of the electronic device 1301. The support member 1300 may include an acoustic passage 1310 and a branch passage 1320. For example, at least one of the acoustic passage 1310 or the branch passage 1320 may be formed by perforating at least a partial area of the support member 1300.

The acoustic passage 1310 may be a path along which a sound passes between the inside and the outside of the electronic device 1301. The acoustic passage 1310 may extend from a microphone hole 303 of the side member 341 to a microphone module 1350. A sound (or, audio) external to the electronic device 1301 may be introduced into the microphone module 1350 through the microphone hole 303 of the side member 341 and the acoustic passage 1310 and the branch passage 1320 of the support member 1300.

The acoustic passage 1310 may extend from the outside of the electronic device 1301 or the microphone hole 303 toward the microphone module 1350 and may have a bent portion in at least a partial section. For example, the acoustic passage 1310 may include at least two sections. For example, the acoustic passage 1310 may include a first section 1311 and a second section 1312.

The branch passage 1320 may be formed to be an empty space in the support member 1300. The branch passage 1320 may be disposed to overlap at least one of a waterproof member 1331 or an adhesive member 1332 of a waterproof structure 1330. At least a portion of the branch passage 1320 may overlap the waterproof member 1331 of the waterproof structure 1330.

The branch passage 1320 may include a plurality of branch passages. For example, the branch passage 1320 may include a first branch passage 1360 and a second branch passage 1370. The first branch passage 1360 and the second branch passage 1370 may diverge from the acoustic passage 1310 in different directions. For example, the first branch passage 1360 may diverge from the acoustic passage 1310 in the first direction D1, and the second branch passage 1370 may diverge from the acoustic passage 1310 in the second direction D2. Each of the first branch passage 1360 and the second branch passage 1370 may distribute the pressure of a sound received from the outside through the acoustic passage 1310 to minimize stress applied to a vibration plate of the microphone module 1350 (e.g., the vibration plate 456 of FIG. 4). Accordingly, the robustness of the vibration plate may be secured, and thus a defect due to damage to the vibration plate may be minimized.

According to an embodiment, the branch passage 1320 and the acoustic passage 1310 may be formed through the same processing process or different processing processes. At least one of the branch passage 1320 or the acoustic passage 1310 may be formed through at least one of a drilling process or a processing process using a mold.

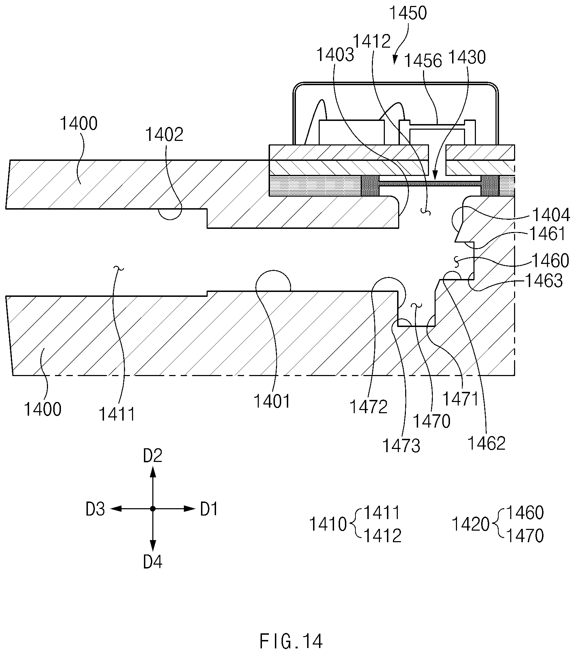

FIG. 14 is a schematic view illustrating an acoustic passage and a branch passage of an electronic device according to an embodiment.

Referring to FIG. 14, the electronic device according to an embodiment may include a support member 1400 (e.g., the support member 342 of FIG. 4) having the acoustic passage 1410 and the branch passage 1420.

The acoustic passage 1410 may include a plurality of acoustic sections. For example, the acoustic passage 1410 may include a first section 1411 and a second section 1412. The first section 1411 may be surrounded by a first inner surface 1401 and a second inner surface 1402. The second section 1412 may be surrounded by a third inner surface 1403 and a fourth inner surface 104.

The branch passage 1420 may diverge from the acoustic passage 1410 at the position where a vibration plate 1456 and the acoustic passage 1410 overlap each other. The branch passage 1420 may include a plurality of branch passages diverging from the acoustic passage 1410. The branch passage 1420 may include a first branch passage 1460 and a second branch passage 1470.

The first branch passage 1460 may diverge in the first direction D1 from at least one of the first section 1411 or the second section 1412 of the acoustic passage 1410. The first branch passage 1460 may be recessed in the first direction D1 from the fourth inner surface 1404 facing in the second direction D2.

The first branch passage 1460 may include a first branch inner surface 1461 and a second branch inner surface 1462. The first branch inner surface 1461 may be bent from a portion of the fourth inner surface 1404 in the first direction D1. The second branch inner surface 1462 may be bent from another portion of the fourth inner surface 1404 in the first direction D1 or may extend from the first inner surface 1401 in the first direction D1. The second branch inner surface 1462 may be formed to face the first branch inner surface 1461 with the first branch passage 1460 therebetween. For example, a first branch bottom surface 1463 may be formed between the first branch inner surface 1461 and the second branch inner surface 1462. The first branch bottom surface 1463 may be formed to face in the second direction D2. In another example, the first branch inner surface 1461 and the second branch inner surface 1462 may be directly connected with each other without the first branch bottom surface 1463.

The second branch passage 1470 may diverge in the fourth direction D4 from at least one of the first section 1411 or the second section 1412 of the acoustic passage 1410. The second branch passage 1470 may be recessed in the fourth direction D4 from the first inner surface 1201 facing in the third direction D3. The second branch passage 1470 may include a third branch inner surface 1471 and a fourth branch inner surface 1472. The third branch inner surface 1471 may be bent from the fourth inner surface 1404 or the second branch inner surface 1462 in the fourth direction D4. The fourth branch inner surface 1472 may be bent from the first inner surface 1401 in the first direction D1. The fourth branch inner surface 1472 may be formed to face the third branch inner surface 1471 with the second branch passage 1470 therebetween. For example, a second branch bottom surface 1473 may be formed between the third branch inner surface 1471 and the fourth branch inner surface 1472. The second branch bottom surface 1473 may be formed to face in the second direction D2. In another example, the third branch inner surface 1471 and the fourth branch inner surface 1472 may be directly connected with each other without the second branch bottom surface 1473.

According to an embodiment, at least one of the first branch passage 1460 or the second branch passage 1470 may have a volume less than the volume of at least one of the first section 1411 or the second section 1412 of the acoustic passage 1410. At least one of the first branch passage 1460 or the second branch passage 1470 may have a width less than or equal to the width of at least a portion of at least one of the first section 1411 or the second section 1412 of the acoustic passage 1410. At least one of the first branch passage 1460 or the second branch passage 1470 may have a depth less than the depth of the first section 1411 or the second section 1412 of the acoustic passage 1410. The width (or, diameter) and depth (or, length) of at least one of the first branch passage 1460 or the second branch passage 1470 may be set in consideration of pneumatic and acoustic performance. For example, the length of at least one of the first branch passage 1460 or the second branch passage 1470 may be set in the range of 50% to 200% of the diameter of at least one of the first branch passage 1460 or the second branch passage 1470.

According to an embodiment, at least one of the first branch passage 1460 or the second branch passage 1470 may be formed in the shape of a polygonal prism or a circular cylinder that is open toward the acoustic passage 1410 as illustrated in FIG. 14, in the shape of a cone that is open toward the acoustic passage 1410, or in the shape of a hemisphere that is open toward the acoustic passage 1410. The first branch passage 1460 and the second branch passage 1470 may be formed in the same shape or different shapes.

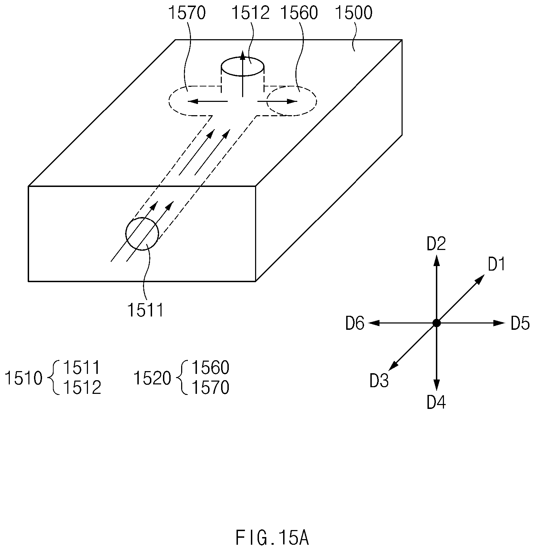

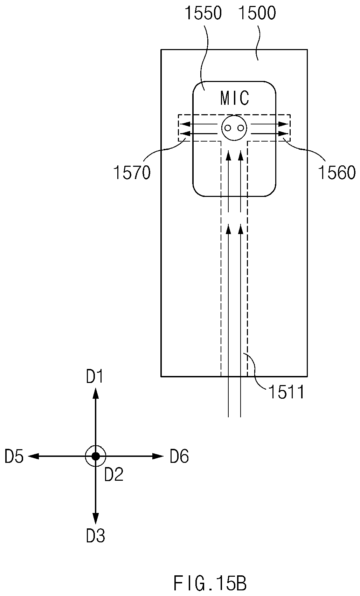

FIG. 15A is a perspective view illustrating a support member of an electronic device according to an embodiment, and FIG. 15B is a top view illustrating the support member having a microphone module disposed thereon according to an embodiment.

Referring to FIGS. 15A and 15B, the support member 1500 of the electronic device according to an embodiment may include an acoustic passage 1510 and a branch passage 1520.

The acoustic passage 1510 may include a plurality of acoustic sections 1511 and 1512. For example, the acoustic passage 1510 may include the first section 1511 and the second section 1512. The first section 1511 may extend from the third direction D3 toward the outside of the electronic device to the first direction D1 toward the inside of the electronic device. The second section 1512 may be bent from the first section 1511 in the second direction D2. For example, the second section 1512 may be vertically bent from the first section 1511.

The branch passage 1520 may diverge from the acoustic passage 1510 at the position where a vibration plate (e.g., the vibration plate 456 of FIG. 4) and the acoustic passage 1510 overlap each other. The branch passage 1520 may include a plurality of branch passages diverging from the acoustic passage 1510. The branch passage 1520 may include a first branch passage 1560 and a second branch passage 1570.

The first branch passage 1560 may diverge in the fifth direction (or, the first vertical direction) D5 from at least one of the first section 1511 or the second section 1512 of the acoustic passage 1510. The first branch passage 1560 may be bent in the fifth direction D5 from at least one of the first section 1511 or the second section 1512 of the acoustic passage 1510. For example, the first branch passage 1560 may be recessed in the fifth direction D5 from one side of an intersection area of each of the first section 1511 and the second section 1512 of the acoustic passage 1510. For example, the fifth direction D5 may be a direction perpendicular to the first direction D1 and the second direction D2.

The second branch passage 1570 may diverge from at least one of the first section 1511 or the second section 1512 of the acoustic passage 1510 in the sixth direction (or, the second vertical direction) D6 opposite to the fifth direction D5. The second branch passage 1570 may be bent in the sixth direction D6 from at least one of the first section 1511 or the second section 1512 of the acoustic passage 1510. For example, the second branch passage 1570 may be recessed in the sixth direction D6 from an opposite side of the intersection area of each of the first section 1511 and the second section 1512 of the acoustic passage 1510. For example, the sixth direction D6 may be a direction perpendicular to the first direction D1 and the second direction D2.

According to an embodiment, at least one of the first branch passage 1560 or the second branch passage 1570 may have a volume less than the volume of at least one of the first section 1511 or the second section 1512 of the acoustic passage 1510. At least one of the first branch passage 1560 or the second branch passage 1570 may have a width less than or equal to the width of at least a portion of at least one of the first section 1511 or the second section 1512 of the acoustic passage 1510. At least one of the first branch passage 1560 or the second branch passage 1570 may have a depth less than the depth of the first section 1511 or the second section 1512 of the acoustic passage 1510. The width (or, diameter) and depth (or, length) of at least one of the first branch passage 1560 or the second branch passage 1570 may be set in consideration of pneumatic and acoustic performance. For example, the length of at least one of the first branch passage 1560 or the second branch passage 1570 may be set in the range of 50% to 200% of the diameter of at least one of the first branch passage 1560 or the second branch passage 1570.

According to an embodiment, at least one of the first branch passage 1560 or the second branch passage 1570 may be formed in the shape of a polygonal prism or a circular cylinder that is open toward the acoustic passage 1510, in the shape of a cone that is open toward the acoustic passage 1510, or in the shape of a hemisphere that is open toward the acoustic passage 1510. The first branch passage 1560 and the second branch passage 1570 may be formed in the same shape or different shapes.

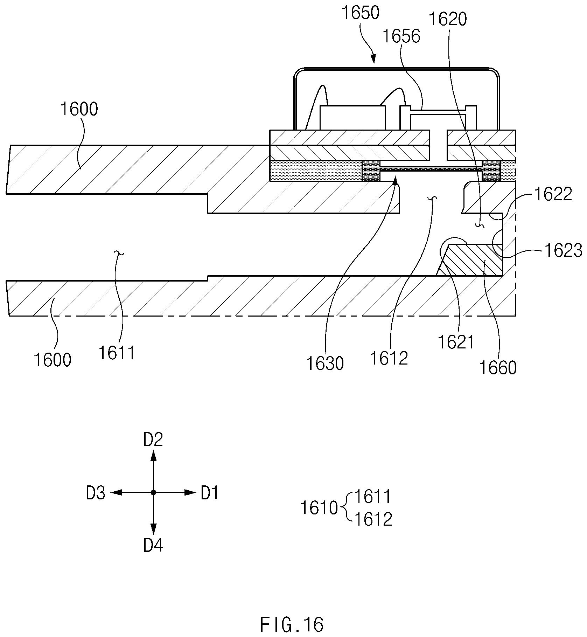

FIG. 16 is a schematic view illustrating an acoustic passage and a branch passage of an electronic device according to an embodiment.

Referring to FIG. 16, the acoustic passage 1610 may be formed by perforating at least a partial area of a support member 1600. The acoustic passage 1610 may include a first section 1611 and a second section 1612. The first section 1611 may be formed in the first direction D1 and may extend into the inner space of the electronic device. The second section 1612 may be formed in the second direction D2 and may extend toward a waterproof structure 1630 and a vibration plate 1656 of a microphone module 1650. The second section 1612 may be disposed to be bent from the first section 1611 in the second direction D2.

A space reduction member 1660 may be disposed in a portion of the acoustic passage 1610 to form the branch passage 1620. The volume of the portion of the acoustic passage 1610 may be reduced by the space reduction member 1660, and the branch passage 1620 may be formed accordingly. The branch passage 1620 may have a volume less than the volume of at least one of the first section 1611 or the second section 1612 of the acoustic passage 1610. The branch passage 1620 may be surrounded by a first branch inner surface 1621, a second branch inner surface 1622, and a branch bottom surface 1623. At least one of the first branch inner surface 1621, the second branch inner surface 1622, or the branch bottom surface 1623 may be a surface of the space reduction member 1660. For example, as illustrated in FIG. 16, the first branch inner surface 1621 may be a surface of the space reduction member 1660, and the second branch inner surface 1622 and the branch bottom surface 1623 may be surfaces of the support member 1600.

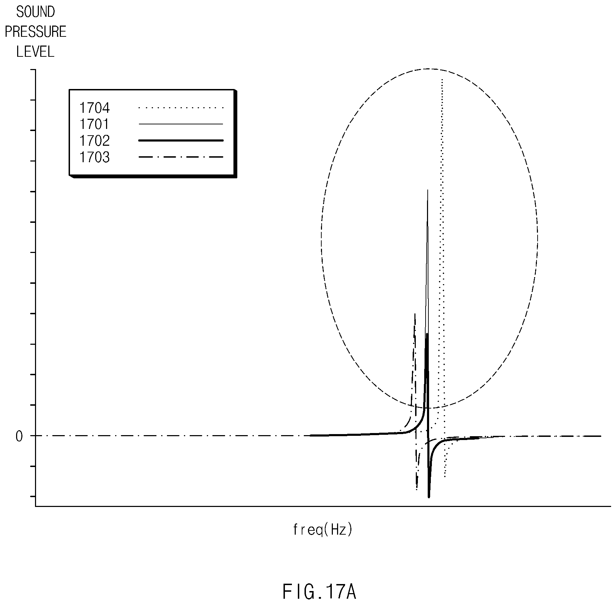

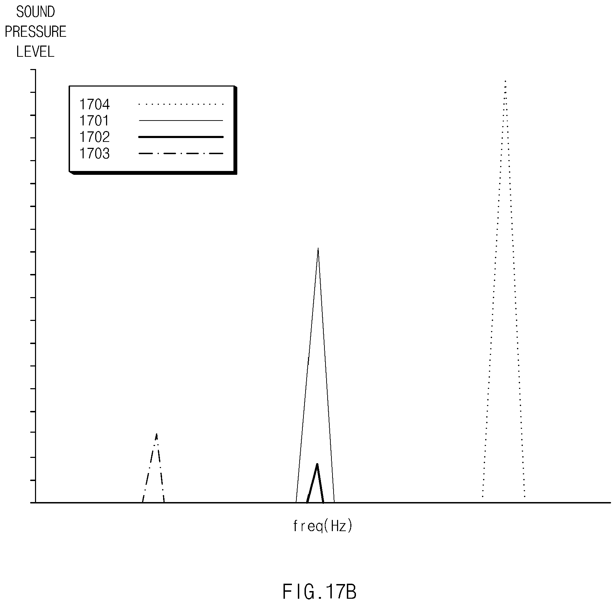

FIG. 17A is a view illustrating measurement results of sound pressure levels depending on a presence or absence of a branch passage of an electronic device according to an embodiment, and FIG. 17B is an enlarged view of a dotted area in FIG. 17A.

Referring to FIGS. 17A and 17B, '1701' is a graph depicting sound pressure level versus frequency in an embodiment that includes a branch passage (e.g., the branch passage 420 of FIG. 4, the branch passage 520 of FIG. 5, the branch passages 620 of FIGS. 6A to 6C, the branch passages 720 of FIGS. 7A to 7F, and/or the branch passage 1620 of FIG. 16) diverging in the first direction (e.g., the first direction D1 of FIGS. 4 to 7F). '1702' is a graph depicting sound pressure level versus frequency in an embodiment that includes a branch passage (e.g., the branch passage 820 of FIG. 8, the branch passage 920 of FIG. 9, and/or the branch passages 1020 of FIGS. 10A to 10C) diverging in the second direction (e.g., the second direction D2 of FIGS. 8 to 10C). '1703' is a graph depicting sound pressure level versus frequency in an embodiment that includes a first branch passage (e.g., the first branch passage 1460 of FIG. 14) diverging in the first direction and a second branch passage (e.g., the second branch passage 1470 of FIG. 14) diverging in the second direction. '1704' is a graph depicting sound pressure level versus frequency in a comparative example that does not include a branch passage.

In the comparative example 1704 that does not include a branch passage, when strong external air pressure is applied to a microphone hole, the sound pressure level at the output may be higher than the sound pressure level at the input, and therefore the possibility that a vibration plate of a microphone module will be damaged may be increased. In the embodiments including the branch passages, when strong external air pressure is applied to a microphone hole, the external air pressure may be lowered through the branch passages, and thus the sound pressure level at the output may be lower than the sound pressure level at the input. For example, it can be seen that the sound pressure level in the embodiment 1701 including the branch passage diverging in the first direction is lowered by about 0.8N/m² when compared to the sound pressure level in the comparative example 1704 that does not include a branch passage. It can be seen that the sound pressure level in the embodiment 1702 including the branch passage diverging in the second direction is lowered by about 1.7N/m² when compared to the sound pressure level in the comparative example 1704 that does not include a branch passage. It can be seen that the sound pressure level in the embodiment 1703 including the branch passage diverging in the first direction and the branch passage diverging in the second direction is lowered by about 1.61N/m² when compared to the sound pressure level in the comparative example 1704 that does not include a branch passage.

Table 1 shows the numbers of damaged vibration plates in the embodiments 1701 and 1702, to which the branch passages are applied, and the comparative example 1704, to which a branch passage is not applied, when external input air pressure is provided to an electronic device in which a waterproof structure does not exist between an acoustic passage and a microphone module.

Table 2 shows the numbers of damaged vibration plates in the embodiments 1701 and 1702, to which the branch passages are applied, and the comparative example 1704, to which a branch passage is not applied, when external input air pressure is provided to an electronic device in which a waterproof structure is disposed between an acoustic passage and a microphone module.

As shown in Tables 1 and 2, it can be seen that the number of damaged vibration plates in the embodiments 1702 and 1702 including the branch passages is smaller than the number of damaged vibration plates in the comparative example 1704 that does not include a branch passage. As described above, the branch passages may reduce the pressure applied to the vibration plates, and thus damage to the vibration plates in the embodiments including the branch passages may be minimized.

**[Table 1]**

| External input air pressure | 1704 | 1701 | 1702 |
|---|---|---|---|
| 0.1Mpa | 0/10 | 0/10 | 0/10 |
| 0.2MPa | 10/10 (all damaged) | 6/10 | 5/10 |

**[Table 2]**

| External input air pressure | 1704 | 1701 | 1702 |
|---|---|---|---|
| 0.6Mpa | 1/10 | 0/10 | 0/10 |
| 0.7MPa | 3/10 | 2/10 | 1/10 |

Although the embodiments in which the acoustic passage and the branch passage are fluidically connected with the microphone module have been mainly described, an acoustic passage and a branch passage may be fluidically connected with a speaker module. The acoustic passage and the branch passage fluidically connected with the speaker module may have a configuration that is the same as or similar to the configuration of the acoustic passage and the branch passage fluidically connected with the microphone module. The branch passages of the electronic devices described above are not limited to the embodiments described with reference to the drawings, and the branch passages described with reference to the drawings may be applied in combination. For example, a branch passage according to an embodiment may employ only the branch passage of each drawing in plural or may employ one of the branch passages described with reference to FIGS. 4 to 6C, the branch passages described with reference to FIGS. 7A to 7C, the branch passages described with reference to FIGS. 8 to 10C, the branch passages described with reference to FIGS. 11 to 14, the branch passages described with reference to FIGS. 15A and 15B, and the branch passage described with reference to FIG. 16 and at least one of the remaining branch passages in combination.

An electronic device according to an embodiment of the disclosure may include a housing including a front plate, a back plate that faces away from the front plate, and a side member 341 that surrounds a space between the front plate and the back plate, at least one microphone hole 303 that penetrates the side member in a first direction D1 from an outer surface of the side member toward an inner surface of the side member, a microphone module 450 that receives an acoustic signal through the microphone hole, a support member that is disposed between the microphone module and the front plate in the housing and that includes a plurality of inner surfaces, an acoustic passage 410 that is surrounded by the plurality of inner surfaces of the support member and that faces toward the microphone module from the microphone hole, and a branch passage 420 that is formed in the support member and that diverges from the acoustic passage. The acoustic passage 410 may include a first section 411 that extends from the microphone hole in the first direction D1 and a second section 412 fluidically connected with the first section and bent in a second direction D2 toward the microphone module to face the microphone module. The branch passage 420 may be formed in a direction different from the second direction D2 from at least one of the plurality of inner surfaces of the support member.

According to an embodiment, the electronic device may further include a printed circuit board disposed between the back plate and the support member, and the microphone module may include a microphone substrate that is disposed on the printed circuit board and that includes an inner hole fluidically connected with the second section in the second direction and a vibration plate disposed on the microphone substrate to face toward the back plate.

According to an embodiment, the branch passage may diverge from the acoustic passage in a direction inclined with respect to at least one of the first direction or the second direction at a position where the vibration plate and the acoustic passage overlap each other.

According to an embodiment, the branch passage may include a first branch passage that diverges from the acoustic passage in the first direction at a position where the vibration plate and the acoustic passage overlap each other and a second branch passage that diverges from the acoustic passage in a direction opposite to the second direction at a position where the vibration plate and the acoustic passage overlap each other.

According to an embodiment, the branch passage may include a first branch passage that diverges from the acoustic passage in a first vertical direction perpendicular to the first direction and the second direction at a position where the vibration plate and the acoustic passage overlap each other and a second branch passage that diverges from the acoustic passage in a second vertical direction opposite to the first vertical direction at a position where the vibration plate and the acoustic passage overlap each other.

According to an embodiment, the acoustic passage may further include a third section and a fourth section disposed between the first section and the second section. The third section may be bent from the first section in a direction opposite to the second direction to face toward the fourth section, and the fourth section may be bent from the third section in the first direction to face toward the second section.

According to an embodiment, at least one inner surface that faces in a direction (e.g., the third direction) opposite to the first direction among the plurality of inner surfaces may be recessed in the first direction to form the branch passage.

According to an embodiment, at least one inner surface that faces in the second direction among the plurality of inner surfaces may be recessed in a direction (e.g., the fourth direction) opposite to the second direction to form the branch passage.

According to an embodiment, the branch passage may be disposed at a position where the vibration plate and the acoustic passage overlap each other.

According to an embodiment, the branch passage may have a smaller volume than at least one of the first section or the second section.

According to an embodiment, the electronic device may further include a space reduction member disposed in a portion of the acoustic passage, and a portion of the branch passage may be surrounded by at least a portion of a surface of the space reduction member.

According to an embodiment, the branch passage may have a decreasing width farther away from the acoustic passage.

According to an embodiment, a width of the branch passage may be less than a length of the branch passage.

According to an embodiment, the electronic device may further include a waterproof structure disposed between the microphone module and the acoustic passage, and the branch passage may overlap a portion of the waterproof structure.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 340) including one or more instructions that are stored in a storage medium (e.g., internal memory 336 or external memory 338) that is readable by a machine (e.g., the electronic device 301). For example, a processor (e.g., the processor 320) of the machine (e.g., the electronic device 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a housing including a front plate, a back plate configured to face away from the front plate, and a side member configured to surround a space between the front plate and the back plate;
at least one microphone hole configured to penetrate the side member in a first direction from an outer surface of the side member toward an inner surface of the side member;
a microphone module configured to receive an acoustic signal through the microphone hole;
a support member disposed between the microphone module and the front plate in the housing, the support member including a plurality of inner surfaces;
an acoustic passage surrounded by the plurality of inner surfaces of the support member and configured to face toward the microphone module from the microphone hole; and
a branch passage formed in the support member and configured to diverge from the acoustic passage,
wherein the acoustic passage includes:
a first section configured to extend from the microphone hole in the first direction; and
a second section fluidically connected with the first section and bent in a second direction toward the microphone module to face the microphone module, and
wherein the branch passage is formed in a direction different from the second direction from at least one of the plurality of inner surfaces of the support member.

2. The electronic device of claim 1, further comprising:
a printed circuit board disposed between the back plate and the support member,
wherein the microphone module includes:
a microphone substrate disposed on the printed circuit board, the microphone substrate including an inner hole fluidically connected with the second section in the second direction; and
a vibration plate disposed on the microphone substrate to face toward the back plate.

3. The electronic device of claim 2, wherein the branch passage diverges from the acoustic passage in a direction inclined with respect to at least one of the first direction or the second direction at a position where the vibration plate and the acoustic passage overlap each other.

4. The electronic device of claim 2, wherein the branch passage includes:
a first branch passage configured to diverge from the acoustic passage in the first direction at a position where the vibration plate and the acoustic passage overlap each other; and
a second branch passage configured to diverge from the acoustic passage in a direction opposite to the second direction at a position where the vibration plate and the acoustic passage overlap each other.

5. The electronic device of claim 2, wherein the branch passage includes:
a first branch passage configured to diverge from the acoustic passage in a first vertical direction perpendicular to the first direction and the second direction at a position where the vibration plate and the acoustic passage overlap each other; and
a second branch passage configured to diverge from the acoustic passage in a second vertical direction opposite to the first vertical direction at a position where the vibration plate and the acoustic passage overlap each other.

6. The electronic device of claim 1, wherein the acoustic passage further includes a third section and a fourth section disposed between the first section and the second section.

7. The electronic device of claim 6, wherein the third section is bent from the first section in a direction opposite to the second direction to face toward the fourth section, and
wherein the fourth section is bent from the third section in the first direction to face toward the second section.

8. The electronic device of claim 1, wherein at least one inner surface configured to face in a direction opposite to the first direction among the plurality of inner surfaces is recessed in the first direction to form the branch passage.

9. The electronic device of claim 1, wherein at least one inner surface configured to face in the second direction among the plurality of inner surfaces is recessed in a direction opposite to the second direction to form the branch passage.

10. The electronic device of claim 2, wherein the branch passage is disposed at a position where the vibration plate and the acoustic passage overlap each other.

11. The electronic device of claim 1, wherein the branch passage has a smaller volume than at least one of the first section or the second section.

12. The electronic device of claim 1, further comprising:
a space reduction member disposed in a portion of the acoustic passage,
wherein a portion of the branch passage is surrounded by at least a portion of a surface of the space reduction member.

13. The electronic device of claim 1, wherein the branch passage has a decreasing width farther away from the acoustic passage.

14. The electronic device of claim 1, wherein a width of the branch passage is less than a length of the branch passage.

15. The electronic device of claim 1, further comprising:
a waterproof structure disposed between the microphone module and the acoustic passage,
wherein the branch passage overlaps a portion of the waterproof structure.
